# EUROPÄISCHE PATENTSCHRIFT

(11) **EP 0 625 551 B1**
(45) Veröffentlichungstag und Bekanntmachung des Hinweises auf die Patenterteilung: **29.09.1999**
(21) Anmeldenummer: 94810277.7
(22) Anmeldetag: 09.05.1994
(51) Int. Cl.: C09B 67/22, D06P 3/66, D06P 3/24

(54) **Farbstoffmischungen, Verfahren zu deren Herstellung und deren Verwendung**
Mixtures of dyes, process for their preparation and the use thereof
Mélanges de colorants, procédé pour leur préparation et leur utilisation

(30) Priorität: 17.05.1993 CH 149593; 29.06.1993 CH 195193
(43) Veröffentlichungstag der Anmeldung: 23.11.1994
(73) Patentinhaber: Ciba Specialty Chemicals Holding Inc., 4057 Basel (CH)
(72) Erfinder: Klier, Herbert, D-79189 Bad Krozingen-Biengen (DE); Müller, Bernhard, Dr., D-79588 Efringen-Kirchen (DE); Ruhlmann, Edmond, Dr., F-68300 Saint Louis (FR); Tzikas, Athanassios, Dr., CH-4133 Pratteln (CH)

(56) Entgegenhaltungen:
- EP-A- 0 478 503
- EP-A- 0 486 423
- EP-A- 0 495 753
- WO-A-93/18224
- DE-C- 4 142 766

## Beschreibung

Die vorliegende Erfindung betrifft neue Mischungen von Reaktivfarbstoffen, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Aus der EP-A-0 478 503 und der EP-A-0 495 753 sind Reaktivfarbstoffe der nachfolgenden Formel (1) bekannt.

In der WO-A-93/18224 werden Mischungen von Reaktivfarbstoffen der Formel (1) offenbart, wobei sich die Mischungskomponenten jedoch nicht hinsichtlich der Reste R₂, R₃ und B unterscheiden.

Der voriiegenden Erfindung liegt daher die Aufgabe zugrunde, neue, verbesserte Mischungen von Reaktivfarbstoffen für das Färben und Bedrucken von Fasermaterialien zu finden. welche die oben charakterisierten Qualitäten in hohem Masse besitzen. Die neuen Farbstoffmischungen sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten Farbstoffmischungen die gestellte Aufgabe weitgehend gelöst wird.

Gegenstand der Erfindung sind daher Farbstoffmischungen, welche dadurch gekennzeichnet sind, dass sie mindestens zwei Reaktivfarbstoffe der Formel 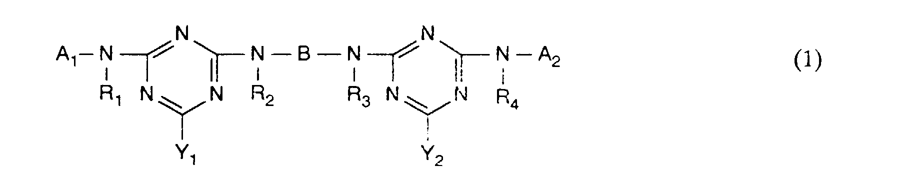 enthalten, worin
A₁ und A₂ identische Bedeutungen haben und der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes sind,
R₁, R₂, R₃ und R₄ unabhängig voneinander Wasserstoff oder gegebenenfalls substituiertes C₁-C₄-Alkyl sind,
B ein C₂-C₁₂-Alkylenrest ist, welcher durch 1, 2 oder 3 Reste -O- unterbrochen sein kann, Y₁ und Y₂ unabhängig voneinander Halogen oder Carboxypyridinium bedeuten, und sich die genannten Reaktivfarbstoffe der Formel (1) voneinander nur hinsichtlich der Bedeutungen der Reste R₂, R₃ und/oder B unterscheiden,
mit der Massgabe, dass die Farbstoffmischungen nicht zwei oder mehr der Farbstoffe der Formeln 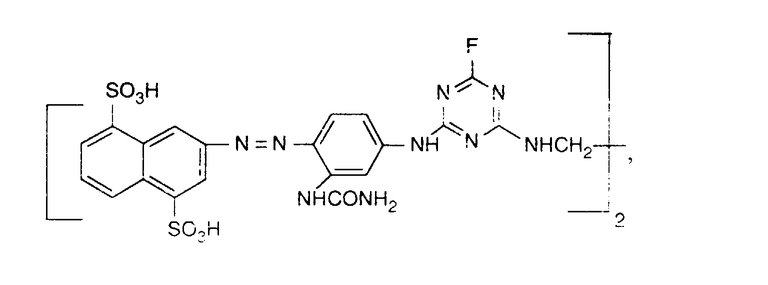 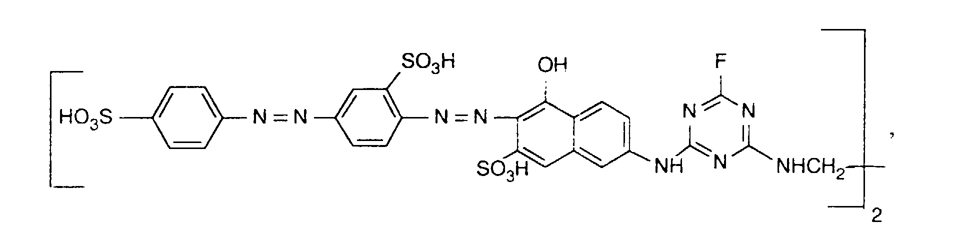 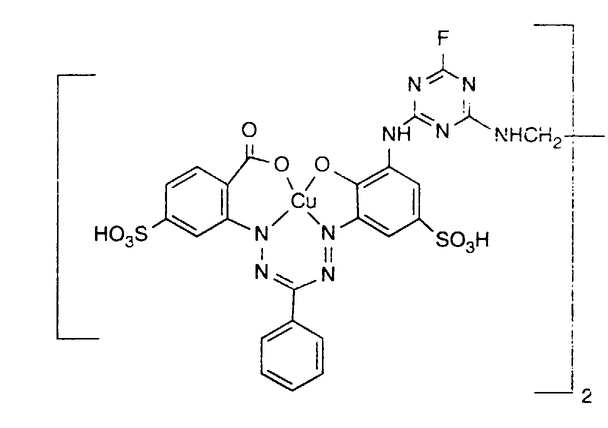 und 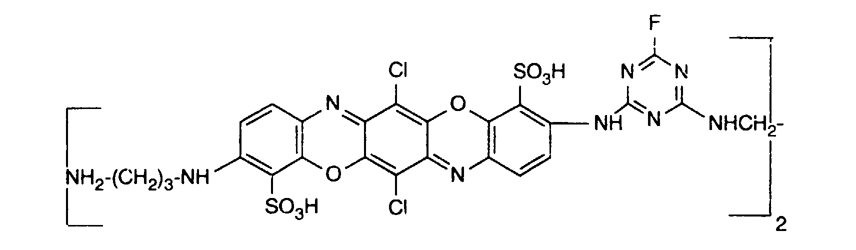 enthalten.

Die Reste R₁, R₂, R₃ und R₄ in den Reaktivfarbstoffen der Formel (1) sind als Alkylreste geradkettig oder verzweigt; die Alkylreste können weitersubstituiert sein, z.B. durch Halogen, Hydroxy, Cyan, C₁-C₄-Alkoxy, C₁-C₄-Alkoxycarbonyl, Carboxy, Sulfamoyl, Sulfo oder Sulfato. Als Beispiele für R₁, R₂, R₃ und R₄ seien die folgenden Reste genannt: Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, ß-Methoxyäthyl, β-Aethoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise sind R₁, R₂, R₃ und R₄ unabhängig voneinander Wasserstoff, Methyl oder Aethyl, insbesondere Wasserstoff.

Besonders bevorzugt ist B ein C₂-C₆-Alkylenrest und vorzugsweise ein Rest der Formel 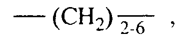 wobei die Bedeutungen als Äthylen und Propylen von besonderem Interesse sind.

Die Reste Y₁ und Y₂ in den Reaktivfarbstoffen der Formel (1) bedeuten unabhängig voneinander insbesondere Fluor oder Chlor. Vorzugsweise haben Y₁ und Y₂ jeweils identische Bedeutungen. Besonders bevorzugt enthalten die erfindungsgemässen Farbstoffmischungen mindestens zwei Reaktivfarbstoffe der Formel (1), worin Y₁ und Y₂ identische Bedeutungen haben.

Die Reste A₁ und A₂ in den Reaktivfarbstoffen der Formel (1) können an ihrem Grundgerüst die bei organischen Farbstoffen üblichen Substituenten gebunden enthalten.

Als Beispiele für Substituenten im Rest A₁ und A₂ seien genannt: Alkylgruppen mit 1 bis 4 Kohlenstoffatomen, wie Methyl, Aethyl, Propyl, Isopropyl oder Butyl, wobei die Alkylreste z.B. durch Hydroxyl, Sulfo oder Sulfato weitersubstituiert sein können; Alkoxygruppen mit 1 bis 4 Kohlenstoffatomen, wie Methoxy, Aethoxy, Propoxy, Isopropoxy oder Butoxy, wobei die Alkylreste z.B. durch Hydroxyl, Sulfo oder Sulfato weitersubstituiert sein können; gegebenenfalls durch C₁-C₄-Alkyl, C₁-C₄-Alkoxy, Halogen, Carboxy oder Sulfo substituiertes Phenyl; Acylaminogruppen mit 1 bis 8 Kohlenstoffatomen, insbesondere solche Alkanoylaminogruppen, wie z.B. Acetylamino oder Propionylamino; gegebenenfalls im Phenylring durch C₁-C₄-Alkyl, C₁-C₄-Alkoxy, Halogen oder Sulfo substituiertes Benzoylamino; gegebenenfalls im Phenylring durch C₁-C₄-Alkyl, C₁-C₄-Alkoxy, Halogen oder Sulfo substituiertes Phenylamino; N,N-Di-β-hydroxyäthylamino; N,N-Di-β-sulfatoäthylamino; Sulfobenzylamino; N,N-Disulfobenzylamino; Alkoxycarbonyl mit 1 bis 4 Kohlenstoffatomen im Alkoxyrest, wie Methoxycarbonyl oder Aethoxycarbonyl: Alkylsulfonyl mit 1 bis 4 Kohlenstoffatomen, wie Methylsulfonyl oder Aethylsulfonyl; Trifluormethyl; Nitro; Amino; Cyano; Halogen, wie Fluor, Chlor oder Brom; Carbamoyl; N-Alkylcarbamoyl mit 1 bis 4 Kohlenstoffatomen im Alkylrest, wie N-Methylcarbamoyl oder N-Aethylcarbamoyl; Sulfamoyl; N-Mono- oder N,N-Dialkylsulfamoyl mit jeweils 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, wobei die Alkylreste z.B. durch Hydroxy oder Sulfo weitersubstituiert sein können; N-(β-Hydroxyäthyl)-sulfamoyi; N,N-Di-(β-hydroxyäthyl)-sulfamoyl; gegebenenfalls durch C₁-C₄-Alkyl, C₁-C₄-Alkoxy, Halogen, Carboxy oder Sulfo substituiertes N-Phenylsulfamoyl; Ureido; Hydroxy; Carboxy; Sulfomethyl oder Sulfo sowie faserreaktive Reste.

Die Reste A₁ und A₂ enthalten bevorzugt jeweils mindestens eine Sulfogruppe, insbesondere 1 bis 4 Sulfogruppen und vorzugsweise 1 bis 3 Sulfogruppen.

Eine Reaktivgruppe im Rest A₁ oder A₂ in den Reaktivfarbstoffen der Formel (1) ist beispielsweise ein durch ein abspaltbares Atom oder eine abspaltbare Gruppe substituierter Alkanoyl- oder Alkylsulfonylrest, ein gegebenenfalls durch ein abspaltbares Atom oder eine abspaltbare Gruppe substituierter Alkenoyl- oder Alkensulfonylrest oder ein eine Vinylgruppe enthaltender Alkenoyl- oder Alkensulfonylrest. Die genannten Alkanoyl-, Alkylsulfonyl- und Alkensulfonylreste enthalten in der Regel 2 bis 8 Kohlenstoffatome und die Alkenoylreste in der Regel 3 bis 8 Kohlenstoffatome. Des weiteren sind durch ein abspaltbares Atom oder eine abspaltbare Gruppe substituierte carbo- oder heterocyclische 4-, 5- oder 6-Ringe enthaltende Reste zu nennen. Als heterocyclische Reste kommen z.B. solche in Betracht, welche mindestens einen abspaltbaren Substituenten an einen heterocyclischen Rest gebunden enthalten; unter anderem solche, die mindestens einen reaktiven Substituenten an einen 5- oder 6-gliedrigen heterocyclischen Ring gebunden enthalten, wie an einen Monoazin-, Diazin-, Triazin- , Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatische Ringe aufweist, wie ein Chinolin-, Phthalazin-, Chinazolin-, Chinoxalin-, Acridin-, Phenazin- und Phenanthridin-Ring-System.

Abspaltbare Atome bzw. abspaltbare Gruppen sind neben weiteren beispielsweise Halogen, wie Fluor, Chlor oder Brom, Ammonium einschliesslich Hydrazinium, Sulfato, Thiosulfato, Phosphato, Acetoxy, Propionoxy, Azido, Carboxypyridinium oder Rhodanido.

Als Brückenglied zwischen dem Farbstoffrest und dem faserreaktiven Rest kommen neben der direkten Bindung die verschiedensten Reste in Betracht. Das Brückenglied ist z.B. ein aliphatischer, aromatischer oder heterocyclischer Rest; ferner kann das Brückenglied auch aus verschiedenen derartigen Resten zusammengesetzt sein. Das Brückenglied enthält in der Regel mindestens eine funktionelle Gruppe, z.B. die Carbonylgruppe oder die Aminogruppe, wobei die Aminogruppe durch gegebenenfalls durch Halogen, Hydroxy, Cyan, C₁-C₄-Alkoxy, C₁-C₄-Alkoxycarbonyl, Carboxy, Sulfamoyl, Sulfo oder Sulfato substituiertes C₁-C₄-Alkyl weitersubstituiert sein kann. Als aliphatischer Rest kommt z.B. ein Alkylenrest mit 1 bis 7 Kohlenstoffatomen oder dessen verzweigte Isomere in Betracht. Die Kohlenstoffkette des Alkylenrestes kann durch ein Heteroatom, wie z.B. ein Sauerstoffatom, unterbrochen sein. Als aromatischer Rest kommt z.B. ein Phenylrest, der durch C₁-C₄-Alkyl, wie z.B. Methyl oder Aethyl, C₁-C₄-Alkoxy, wie z.B. Methoxy oder Aethoxy, Halogen, wie z.B. Fluor, Brom oder insbesondere Chlor, Carboxy oder Sulfo substituiert sein kann, und als heterocyclischer Rest z.B. ein Piperazinrest in Betracht.

Als Beispiele für Reaktivgruppen seien die folgenden genannt:
Vinylsulfonyl, β-Chloräthylsulfonyl, β-Sulfatoäthylsulfonyl, β-Acetoxy-äthylsulfonyl, Phosphatoäthylsulfonyl, β-Thiosulfatoäthylsulfonyl, N-Methyl-N-(β-sulfoäthyl-sulfonyl)-amino, Acryloyl, Mono-, Di- oder Trichloracryloyl wie -CO-CCl=CH₂, -CO-CH=CH-Cl, -CO-CCl=CH-CH₃; Mono-, Di- oder Tribromacryloyl wie -CO-CBr=CH₂, -CO-CH=CH-Br, -CO-CBr=CH-CH₃; sowie -CO-CCl=CH-COOH, -CO-CH=CCl-COOH, -CO-CBr=CH-COOH, -CO-CH=CBr-COOH, -CO-CCl=CCl-COOH, -CO-CBr=CBr-COOH; Vorstufen des Acryloylrestes und der Derivate des Acryloylrestes wie β-Chlor- oder β-Brompropionyl, 3-Phenylsulfonylpropionyl, 3-Methylsulfonylpropionyl, 2-Chlor-3-phenylsulfonylpropionyl, 2,3-Dichlorpropionyl, 2,3-Dibrompropionyl; sowie 2-Fluor-2-chlor-3,3-difluorcyclobutan-1-carbonyl, 2,2,3,3-Tetrafluorcyclobutancarbonyl-1- oder sulfonyl-1-, β-(2,2,3,3-Tetrafluorcyclobutyl-1)-acryloyl, α- oder β-Alkenyl- oder Arylsulfonylacryloylgruppen, wie α- oder β-Methylsulfonylacryloyl, Chloracetyl, Bromacetyl, 4-(β-Chloräthylsulfonyl)-butyryl, 4-Vinylsulfonyl-butyryl, 5-(β-Chloräthylsulfonyl)-caproyl, 6-Vinylsulfonylcaproyl; sowie 4-Fluor-3-nitro-benzoyl, 4-Fluor-3-nitrophenylsulfonyl, 4-Fluor-3-methylsulfonylbenzoyl, 4-Fluor-3-cyanbenzoyl, 2-Fluor-5-methylsulfonylbenzoyl.

Des weiteren sind beispielsweise folgende faserreaktiven Reste zu nennen: Mono- oder Dihalogen-symmetrische-triazinylreste, z.B. 2,4-Dichlortriazinyl-6-2-Amino-4-chlortriazinyl-6-, 2-Alkyl-amino-4-chlortriazinyl-6-, wie 2-Methylamino-4-chlortriazinyl-6-, 2-Ethylamino- oder 3-Propylamino-4-chlortriazinyl-6-, 2-β-Oxethylamino-4-chlortriazinyl-6-, 2-Di-β-oxethylamino-4-chlortriazinyl-6- und die entsprechenden Schwefelsäurehalbester, 2-Diethylamino-4-chlortriazinyl-6-, 2-Morpholino- oder 2-Piperidino-4-chlor-triazinyl-6-, 2-Cyclohexylamino-4-chiortriazinyl-6-, 2-Arylamino- und substituiertes Arylamino-4-chlortriazinyl-6-, wie 2-Phenylamino-4-chlortriazinyl-6-, 2-(o-, m- oder p-Carboxy- oder Sulfophenyl)-amino-4-chlortriazinyl-6-, 2-Alkoxy-4-chlortriazinyl-6-, wie 2-Methoxy- oder Ethoxy-4-chlortriazinyl-6-, 2-(Phenylsulfonylmethoxy)-4-chlortriazinyl-6-, 2-Aryloxy und substituieres Aryloxy-4-chlortriazinyl-6-, wie 2-Phenoxy-4-chlortriazinyl-6-, 2-(p-Sulfophenyl)-oxi-4-chlortriazinyl-6-, 2-(o-, m- oder p-Methyl- oder Methoxyphenyl)-oxi-4-chlortriazinyl-6-, 2-Alkylmercapto- oder 2-Arylmercapto- oder 2-(substituiertes Aryl)-mercapto-4-chlortriazinyl-6-, wie 2-β-Hydroxyethyl-mercapto-4-chlortriazinyl-6-, 2-Phenylmercapto-4-chlor-triazinyl-6-, 3-(4'-Methylphenyl)-mercapto-4-chlortriazinyl-6-, 2-(2',4'-Dinitro)-Phenylmercapto-4-chlortriazinyl-6-, 2-Methyl-4-chlortriazinyl-6-, 2-Phenyl-4-chlor-triazinyl-6-, 2,4-Difluor-triazinyl-6-, Monofluortriazinylreste, die durch Amino-, Alkylamino-, Aralkylamino- oder Acylaminogruppen substituiert sind, wobei Alkyl insbesondere gegebenenfalls substituiertes C₁-C₄-Alkyl, Aralkyl insbesondere gegebenenfalls substituiertes Phenyl-C₁-C₄-Alkyl und Aryl insbesondere gegebenenfalls durch Sulfo, C₁-C₄-Alkyl, C₁-C₄-Alkoxy, Carbonsäure-, Acylaminogruppen und Halogenatome wie Fluor, Chlor oder Brom substituiertes Phenyl oder Naphthyl bedeutet, beispielsweise 2-Amino-4-fluor-triazinyl-6, 2-Methylamino-4-fluor-triazinyl-6, 2-Ethyl-amino-4-fluor-triazinyl-6, 2-iso-Propylamino-4-fluor-triazinyl-6, 2-Dimethylamino-4-fluor-triazinyl-6, 2-Diethylamino-4-fluor-triazinyl-6, 2-β-Methoxy-ethylamino-4-fluortriazinyl-6, 2-β-Hydroxyethylamino-4-fluor-triazinyl-6, 2-Di-(β-hydroxyethylamino)-4-fluortriazinyl-6-, 2-β-Sulfoethylamino-4-fluor-triazinyl-6, 2-β-Sulfoethyl-methylamino-4-fluor-triazinyl-6, 2-Carboxymethylamino-4-fluortriazinyl-6, 2-β-Cyanethyl-amino-4-fluor-triazinyl-6, 2-Benzolamino-4-fluor-triazinyl-6, 2-β-Phenylethylamino-4-fluor-triazinyl-6, 2-Benzyl-methylamino-4-fluor-triazinyl-6, 2-(2'-, 3'- oder 4'-Sulfobenzyl)-amino-4-fluor-triazinyl-6, 2-Cyclohexylamino-4-fluortriazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluortriazinyl-6, 2-(o-, m-, p-Chlorphenyl)-amino-4-fluor-triazinyl-6, 2-(o-, m-, p-Methoxyphenyl)-4-fluor-triazinyl-6, 2-(2'-Methyl-4'-sulfophenyl)-amino-4-fluortriazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4-sulfophenyl)-amino-4-fluor-triazinyl-6, 2-(2'-Carboxy-4-sulfophenyl)-amino-4-fluor-triazinyl-6, 2-(6'-Sulfonaphthyl-(2')-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methylphenyl)-amino-4-fluor-triazinyl-6, 2-(N-Ethylphenyl)-amino-4-fluor-triazinyl-6, 2-(N-β-Hydroxyethylphenyl)-amino-4-fluor-triazinyl-6, 2-(N-iso-Propylphenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-4-fluor-triazinyl-6, 2-(3',6',8'-Trisulfonaphthyl-(2'))-4-fluor-triazinyl-6, 2-(3',6'-Disulfonaphthyl-(1'))-4-fluor-triazinyl-6, Mono-. Di- oder Trihalogenpyrimidinylreste, wie 2,4-Dichlorpyrimidinyl-6, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carboalkoxy-pyrimidinyl-6, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methyl-thio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlorchinoxalin-3-carbonyl-, 2- oder 3-Mono-chlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7- oder -6-sulfonyl- oder -carbonyl-, 2- oder 3- oder 4-(4',5'-Dichlorpyridazin-6'-yl-1')-phenylsulfonyl- oder -carbonyl-, β-(4',5'-Dichlorpyridazon-6'-yl-1')-ethyl-carbonyl, N-Methyl-N-(2,4-dichlortriazinyl-6)-carbamyi-, N-Methyl-N-(2-methyl-amino-4-chlortriazinyl-6)-carbamyl-, N-Methyl-N-(2-dimethylamino-4-chlortriazinyl-6)-carbamyl, N-Methyl- oder N-Ethyl-N-(2,4-dichlortriazinyl-6)-amino-acetyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2,5-Difluor-6-methyl-4-pyrimidinyl-. 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl-, 6-Fluor-5-chlor-pyrimidinyl-4, 6-Fluor-5-trifluormethyl-pyrimidinyl-4, 6-Fluor-2-methylpyrimidinyl-4, 6-Fluor-5-chlor-2-methylpyrimidinyl-4, 5,6-Difluor-pyrimidinyl-4. 6-Fluor-5-chlor-2-trifluormethylpyrimidinyl-4, 6-Fluor-2-phenylpyrimidinyl-4, 6-Fluor-5-cyan-pyrimidinyl-4, 6-Fluor-5-nitropyrimidinyl-4, 6-Fluor-5-methyl-sulfonyl-pyrimidinyl-4, 6-Fluor-5-phenylsulfonylpyrimidinyl-4, sulfonylgruppenhaltige Triazinreste, wie 2,4-Bis-(phenylsulfonyl)-triazinyl-6, 2-(3'-Carboxyphenyl)-sulfonyl-4-chlortriazinyl-6, 2-(3'-Sulfophenyl)-sulfonyl-4-chlortriazinyl-6, 2,4-Bis-(3'-carboxyphenylsulfonyl)-triazinyl-6; sulfonylgruppenhaltige Pyrimidinringe, wie 2-Carboxymethylsulfonyl-pyrimidinyl-4-, 2-Methylsulfonyl-6-methylpyrimidinyl-4, 2-Methylsulfonyl-6-ethyl- pyrimidinyl-4-, 2-Phenylsulfonyl-5-chlor-6-methyl-pyrimidinyl-, 2,6-Bis-methylsulfonyl-pyrimidinyl-4-, 2,6-Bis-methyl-sulfonyl-5-chlor-pyrimidinyl-4-, 2,4-Bis-methylsulfonyl-pyrimidin-5-sulfonyl-, 2-Methylsulfonylpyrimidinyl-4, 2-Phenyl-sulfonyl-pyrimidinyl-4-, 2-Trichlormethylsulfonyl-6-methyl-pyrimidinyl-4-, 2-methylsulfonyl-5-chlor-6-methylpyrimidinyl-4-, 2-Methylsulfonyl-5-brom-6-methyl-pyrimidinyl-4-, 2-Methyl-sulfonyl-5-chlor-6-ethyl-pyrimidinyl-4-, 2-Methyl-sulfonyl-5-chlor-6-chlormethyl-pyrimidinyl-4-, 2-Methyl-sulfonyl-4-chlor-6-methylpyrimidin-5-sulfonyl, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethylpyridinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carbonyl-pyrimidinyl-4-, 2-Methylsulfonyl-5-sulfopyrimidinyl-4-, 2-Methylsulfonyl-6-carbomethoxy-pyrimidinyl-4-, 2-Methylsulfonyl-5-carboxypyrimidinyl-4-, 2-Methylsulfonyl-5-cyan-6-methoxypyrimidinyl-4-, 2-Methylsulfonyl-5-chlorpyrimidinyl-4-, 2-Sulfoethylsulfonyl-6-methyl-pyrimidinyl-4-, 2-Methyl-sulfonyl-5-brom-pyrimidinyl-4-, 2-Phenyl-sulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl, 2,6-Bis(methyl-sulfonyl)-pyrimidin-4- oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methyl-pyrimidin-5-sulfonyl- oder -carbonyl-, ammoniumgruppenhaltige Triazinringe, wie Trimethylammonium-4-phenylamino- oder -4-(o-, m- oder p-sulfophenyl)-aminotriazinyl-6-, 2-(1,1-Dimethylhydrazinium)-4-phenylamino- oder -4-(o- m- oder p-sulfophenyl)-aminotriazinyl-6, 2-(2-Isopropyliden-1,1-dimethyl)-hydrazinium-4-phenylamino- oder -4-(o-, m- oder p-sulfophenyl)-amino-triazinyl-6-2-N-Aminopyrrolidinium- oder 2-Amino-piperidinium-4-phenylamino- oder -4-(o-, m- oder p-sulfophenyl)-aminotriazinyl-6-, 2-N-Aminopyrrolidinium- oder 2-N-Aminopiperidinium-4-phenylamino-oder -4-(o-, m- oder p-Sulfophenyl)-aminotriazinyl-6-, ferner 4-Phenylamino- oder -4-(sulfophenylamino)-triazinyl-6-Reste, die in 2-Stellung über eine Stickstoffbindung das 1,4-Bis-azabicyclo-[2,2,2]-octan oder das 1,2-Bis-aza-bicyclo-[0,3,3]-octan quartär gebunden enthalten, 2-Pyridinium-4-phenylamino- oder 4-(o-, m- oder p-Sulfophenyl)-aminotriazinyl-6- sowie entsprechende 2-Oniumtriazinyl-6-Reste, die in 4-Stellung durch Alkylamino-, wie Methylamino-, Ethylamino- oder β-Hydroxyethylamino- oder Alkoxy-, wie Methoxy- oder Alkoxy-, oder Aroxy-, wie Phenoxy- oder Sulfophenoxy-Gruppen substituiert sind: 2-Chlorbenzthiazol-5- oder -6-carbonyl- oder -5- oder -6-sulfonyl-, 2-Arylsulfonyl- oder -Alkyisulfonylbenzthiazol-5- oder -6-carbonyl- oder -5- oder -6-sulfonyl-, wie 2-Methyl-sulfonyl- oder 2-Ethoxysulfonylbenzthiazol-5- oder 6-sulfonyl- oder -carbonyl-, 2-Phenylsulfonyl-benzthiazol-5- oder -6-sulfonyl- oder carbonyl- und die entsprechenden im ankondensierten Benzolring Sulfogruppen enthaltenden 2-Sulfonylbenzthiazol-5- oder 6-carbonyl- oder -sulfonyl-Derivate, 2-Chlorbenzoxazol-5- oder -6-carbonyl- oder -sulfonyl-, 2-Chlor-benzimidazol-5- oder -6-carbonyl- oder sulfonyl-, 2-Chlor-1-methylbenzimidazol-5- oder 6-carbonyl- oder sulfonyl-, 2-Chlor-4-methylthiazol-(1,3)-5-carbonyl- oder -4- oder -5-sulfonyl-, N-Oxid des 4-Chlor- oder 4-Nitrochinolin-5-carbonyl oder auch die Reste 5-Chlor-2,6-difluor-1,3-dicyanphenyl, 2,4-Difluor-1,3,5-tricyanphenyl, 2,4,5-Trifluor-1,3-dicyan-phenyl, 2,4-Dichlor-5-methylsulfonyl-pyrimidinyl-6, 2,4-Trichlor-5-ethylsulfonyl-pyrimidinyl-6, 2-Fluor-5-methylsulfonyl-6'-(2'-sulfophenylamino)-pyrimidinyl -4, 2,5-Dichlor-6-methylsulfonyl-pyrimidinyl-4.

Eine Gruppe von geeigneten Reaktivgruppen umfasst solche der Formeln

-SO₂-Z (2a),

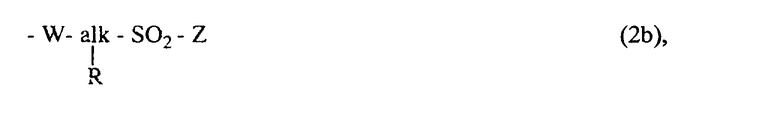

-W-alk-E-alk'-SO₂-Z (2c),

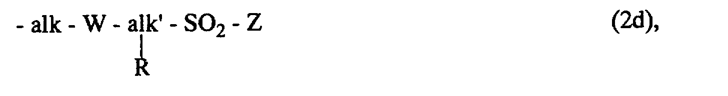

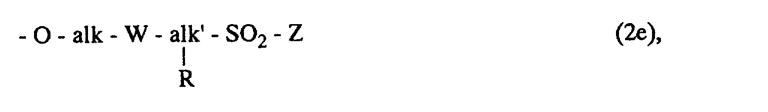

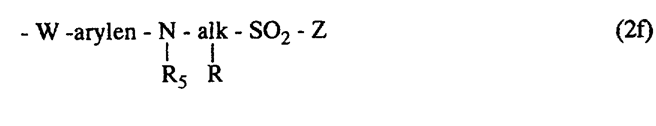

und 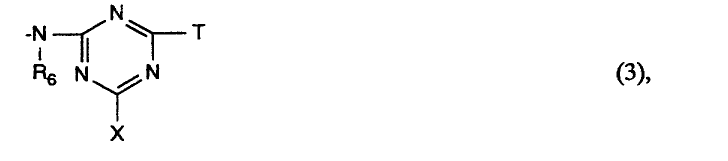 worin W eine Gruppe der Formel -SO₂-NR₅-, -CONR₅- oder -NR₅CO- ist, R₅ Wasserstoff, unsubstituiertes oder durch Hydroxy, Sulfo, Sulfato, Carboxy oder Cyano substituiertes C₁-C₄-Alkyl oder ein Rest der Formel 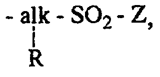 R Wasserstoff, Hydroxy, Sulfo, Sulfato, Carboxy, Cyano, Halogen, C₁-C₄-Alkoxycarbonyl, C₁-C₄-Alkanoyloxy, Carbamoyl oder die Gruppe -SO₂-Z ist, Z der Rest -CH=CH₂ oder -CH₂-CH₂-Y ist, Y eine Abgangsgruppe, E der Rest -O- oder -NR₇ ist, R₇ Wasserstoff oder C₁-C₄-Alkyl, alk und alk' unabhängig voneinander C₁-C₆-Alkylen, arylen einen unsubstituierten oder durch Sulfo, Carboxy, C₁-C₄-Alkyl, C₁-C₄-Alkoxy oder Halogen substituierten Phenylen- oder Naphthylenrest bedeutet, R₆ Wasserstoff oder unsubstituiertes oder durch Carboxy, Cyano, Hydroxy, Sulfo oder Sulfato substituiertes C₁-C₄-Alkyl und X eine als Anion abspaltbare Gruppe ist und T einen Rest der Formel 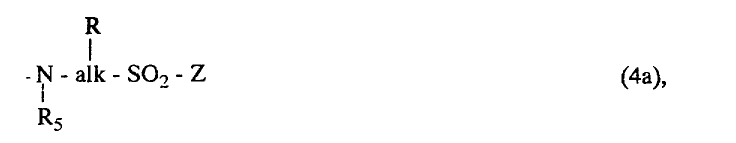 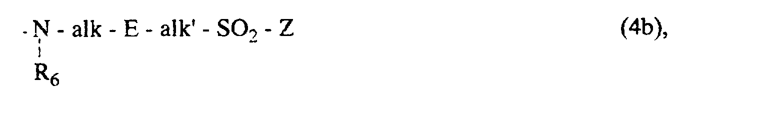 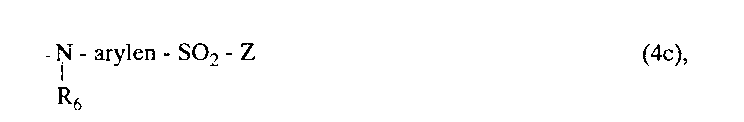 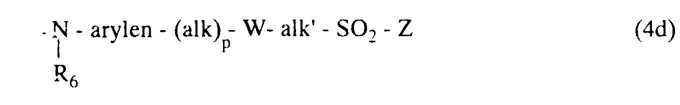 oder 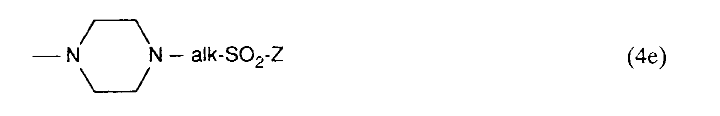 bedeutet, worin R, R₅, R₆, E, W, Z, alk, alk' und arylen die oben angegebenen Bedeutungen haben und p 0 oder 1 ist.

Geeignete Abgangsgruppen Y sind z.B. -Cl, -Br, -F, -OSO₃H, -SSO₃H, -OCO-CH₃, -OPO₃H₂, -OCO-CCl₃, -OCO-CHCl₂, -OCO-CH₂Cl, -OSO₂-C₁-C₄-Alkyl, -OSO₂-N(C₁-C₄-Alkyl)₂ oder -OCO-C₆H₅.

Bevorzugt ist Y eine Gruppe der Formel -Cl, -OSO₃H, -SSO₃H, -OCO-CH₃, -OCO-C₆H₅ oder -OPO₃H₂, insbesondere -OSO₃H.

Bei alk und alk' handelt es sich unabhängig voneinander z.B. um einen Methylen-, Äthylen-, 1,3-Propylen-, 1,4-Butylen-, 1,5-Pentylen- oder 1,6-Hexylenrest oder deren verzweigte Isomere.

Bevorzugt stehen alk und alk' für einen C₁-C₄-Alkylenrest und insbesondere bevorzugt für einen Äthylenrest.

R bedeutet bevorzugt Wasserstoff oder die Gruppe -SO₂-Z, worin Z die zuvor angegebenen Bedeutungen hat. Besonders bevorzugt steht R für Wasserstoff.

R₅ ist vorzugsweise Wasserstoff, C₁-C₄-Alkyl oder eine Gruppe -alk-SO₂-Z, worin alk und Z jeweils die zuvor angegebenen Bedeutungen haben. Besonders bevorzugt ist R₅ Wasserstoff oder C₁-C₄-Alkyl, insbesondere Wasserstoff.

R₆ ist vorzugsweise Wasserstoff oder ein C₁-C₄-Alkylrest und insbesondere bevorzugt Wasserstoff.

Arylen ist vorzugsweise ein 1,3- oder 1,4-Phenylenrest, der unsubstituiert oder z.B. durch Sulfo, Methyl, Methoxy oder Carboxy substituiert ist.

E steht vorzugsweise für -NH- und insbesondere bevorzugt für -O-.

W bedeutet bevorzugt eine Gruppe der Formel -CONH- oder -NHCO-.

X steht z.B. für Fluor, Chlor, Brom, Sulfo. C₁-C₄-Alkylsulfonyl oder Phenylsulfonyl und bevorzugt für Fluor oder Chlor.

Weitere interessante Reaktivgruppen sind solche der Formel (3), worin T eine ais Anion abspaltbare Gruppe ist oder einen nicht-reaktiven Substituenten bedeutet.

Bedeutet T eine als Anion abspaltbare Gruppe, so handelt es sich hierbei z.B. um Fluor, Chlor, Brom, Sulfo, C₁-C₄-Alkylsulfonyl oder Phenylsulfonyl und bevorzugt um Fluor oder Chlor.

Steht T für einen nicht-reaktiven Substituenten, so kann dies z.B. ein Hydroxy-, C₁-C₄-Alkoxy-, C₁-C₄-Alkylthio-, Amino-, N-C₁-C₄-Alkylamino- oder N,N-Di-C₁-C₄-Alkylamino-, wobei das Alkyl gegebenenfalls z.B. durch Sulfo, Sulfato, Hydroxy, Carboxy oder Phenyl substituiert ist, Cyclohexylamino-, Morpholino-, oder N-C₁-C₄-Alkyl-N-phenylamino- oder Phenylamino- oder Naphthylaminorest, wobei das Phenyl oder Naphthyl gegebenenfalls z.B. durch C₁-C₄-Alkyl, C₁-C₄-Alkoxy, Carboxy, Sulfo oder Halogen substituiert ist, sein.

Beispiele für geeignete nicht-reaktive Substituenten T sind Amino, Methylamino, Äthylamino, β-Hydroxyäthylamino, N,N-Di-β-Hydroxyäthylamino, β-Sulfoäthylamino, Cyclohexylamino, Morpholino, o-, m- oder p-Chlorphenylamino, o-, m- oder p-Methylphenylamino, o-, m- oder p-Methoxyphenylamino, o-, m- oder p-Sulfophenylamino, Disulfophenylamino, o-Carboxyphenylamino, 1- oder 2-Naphthylamino, 1-Sulfo-2-naphthylamino, 4,8-Disulfo-2-naphthylamino, N-Äthyl-N-phenylamino, N-Methyl-N-phenylamino, Methoxy, Äthoxy, n- oder iso-Propoxy sowie Hydroxy.

Als nicht-reaktiver Substituent hat T vorzugsweise die Bedeutung Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Phenyl jeweils unsubstituiert oder durch Sulfo, Carboxy, Methyl oder Methoxy substituiert ist. Besonders bevorzugt sind die Bedeutungen als Phenylamino oder N-C₁-C₄-Alkyl-N-phenylamino, worin das Phenyl jeweils unsubstituiert oder durch Sulfo, Carboxy, Methyl oder Methoxy substituiert ist.

Weitere interessante Reaktivgruppen sind Pyrimidin- oder Chinoxalinreste, welche jeweils über mindestens eine als Anion abspaitbare Gruppe verfügen. Beispiele sind der 2,3-Dichlorchinoxalin-6-carbonylaminorest, 2,4-Dichlorpyrimidin-5-carbonylaminorest sowie der Rest der Formel 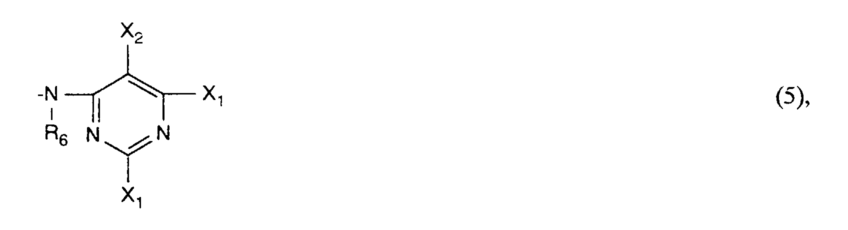 worin einer der Reste X₁ eine als Anion abspaltbare Gruppe ist und der andere Rest X₁ die für T als nicht-reaktiven Substituenten angegebenen Bedeutungen und Bevorzugungen hat oder ein Rest der Formeln (4a) bis (4e) oder eine als Anion abspaltbare Gruppe ist, X₂ ein negativer Substituent ist und R₆ unabhängig die unter Formel (3) angegebenen Bedeutungen hat.

Bei dem als Anion abspaltbaren Rest X₁ handelt es sich vorzugsweise um Fluor oder Chlor, Beispiele für geeignete Reste X₂ sind Nitro, Cyan, C₁-C₄-Alkylsulfonyl, Carboxy, Chlor, Hydroxy, C₁-C₄-Alkoxysulfonyl, C₁-C₄-Alkylsulfinyl, C₁-C₄-Alkoxycarbonyl oder C₂-C₄-Alkanoyl, wobei die Bedeutungen Chlor, Cyano und Methylsulfonyl für X₂ bevorzugt sind.

Besonders bevorzugte Reaktivgruppen sind solche der Formcl (2a), wobei für Z die oben angegebenen Bedeutungen und Bevorzugungen gelten, insbesondere worin Z ein Vinyl- oder β-Sulfatoäthylrest ist, sowie solche der Formel (3), worin für T, X und R₆ die oben angegebenen Bedeutungen und Bevorzugungen gelten. Besonders bevorzugt ist T hierbei ein nicht-reaktiver Rest, inshesondere Phenylamino oder N-C₁-C₄-Alkyl-N-phenylamino, worin das Phenyl jeweils unsubstituiert oder durch Sulfo, Carboxy, Methyl oder Methoxy substituiert ist. X ist hierbei besonders bevorzugt Fluor oder Chlor. R₆ ist hierbei besonders bevorzugt Wasserstoff, Methyl oder Äthyl, insbesondere Wasserstoff. Ganz besonders bevorzugt als Reaktivgruppe ist der Rest der Formel (2a).

Vorzugsweise enthalten die Reste A₁ und A₂ keine Reaktivgruppe.

Bevorzugt sind A₁ und A₂ der Rest eines Monoazo-, Disazo-, Anthrachinon-, Dioxazin-, Phthalocyanin- oder Formazanfarbstoffes.

Als Reste eines Monoazo- oder Disazofarbstoffes kommen insbesondere die folgenden in Betracht:

Farbstoffreste eines Mono- oder Disazofarbstoffes, der Formel

D₁-N=N-(M-N=N)ᵤ-K- (6)

oder

-D₁-N=N-(M-N=N)ᵤ-K (7).

Hierin ist D₁ ist der Rest einer Diazokomponente der Benzol- oder Naphthalinreihe, M der Rest einer Mittelkomponente der Benzol- oder Naphthalinreihe, K der Rest einer Kupplungskomponente der Benzol-, Naphthalin-, Pyrazolon-, 6-Hydroxypyridon-(2)- oder Acetessigsäurearylamid-Reihe und u die Zahl 0 oder 1, wobei D₁, M und K bei Azofarbstoffen übliche Substituenten, wie z.B. die oben angegebenen, tragen können. Insbesondere kommen als solche Substituenten gegebenenfalls durch Hydroxyl, Sulfo oder Sulfato weitersubstituiertes C₁-C₄-Alkyl oder C₁-C₄-Alkoxy, Halogen, Carboxy, Sulfo, Nitro, Cyan, Trifluormethyl, Sulfamoyl, Carbamoyl, Amino, Ureido, Hydroxy, Carboxy, Sulfomethyl, C₂-C₄-Alkanoylamino, gegebenenfalls im Phenylring durch C₁-C₄-Alkyl, C₁-C₄-Alkoxy, Halogen oder Sulfo substituiertes Benzoylamino, gegebenenfalls durch C₁-C₄-Alkyl, C₁-C₄-Alkoxy, Halogen. Carboxy oder Sulfo substituiertes Phenyl, sowie faserreaktive Reste in Betracht, wobei für die faserreaktiven Reste die oben angegebenen Bedeutungen und Bevorzugungen gelten. Ferner kommen noch die von den Farbstoffresten der Formeln (6) und (7) abgeleiteten Metallkomplexe in Betracht, wobei es sich insbesondere um Farbstoffreste eines 1:1-Kupferkomplexazofarbstoffes der Benzol- oder Naphthalinreihe handelt, worin das Kupferatom an je eine metallisierbare Gruppe beidseitig in ortho-Stellung zur Azobrücke gebunden ist.

Besonders bevorzugte Reste eines Monoazo- oder Disazofarbstoffes sind die folgenden: 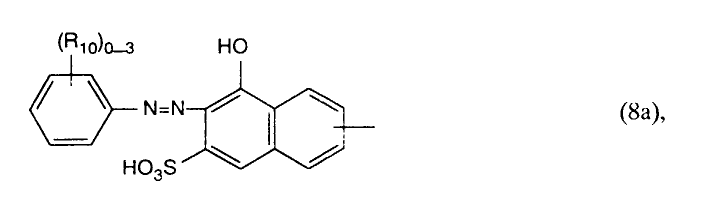 worin R₁₀ für 0 bis 3 gleiche oder verschiedene Substituenten aus der Gruppe C₁-C₄-Alkyl, C₁-C₄-Alkoxy, Halogen, Carboxy und Sulfo steht, 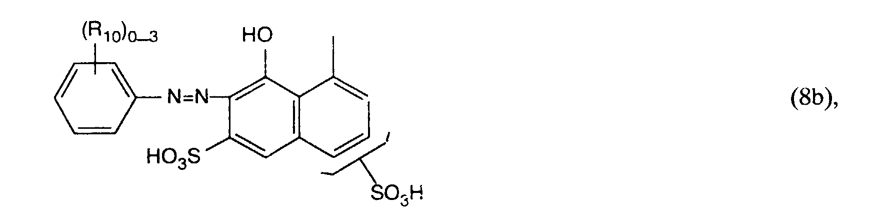 worin R₁₀ für 0 bis 3 gleiche oder verschiedene Substituenten aus der Gruppe C₁-C₄-Alkyl, C₁-C₄-Alkoxy, Halogen, Carboxy und Sulfo steht, 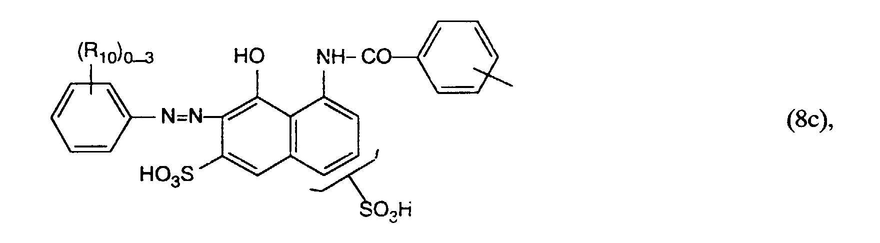 worin R₁₀ für 0 bis 3 gleiche oder verschiedene Substituenten aus der Gruppe C₁-C₄-Alkyl, C₁-C₄-Alkoxy, Halogen, Carboxy und Sulfo steht, 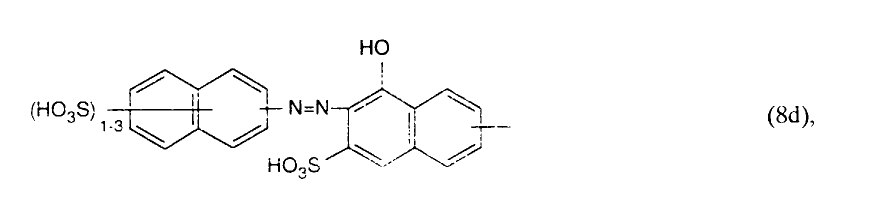 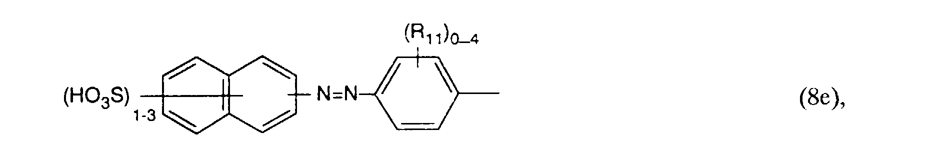 worin R₁₁ für 0 bis 4 gleiche oder verschiedene Substituenten aus der Gruppe Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo steht, 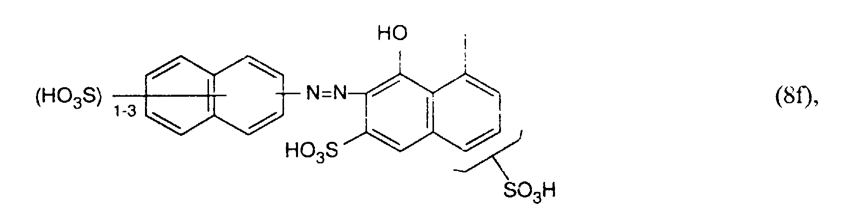 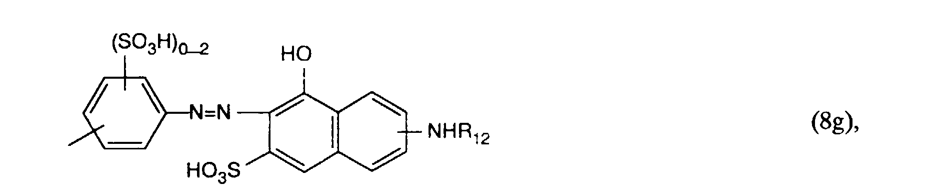 worin R₁₂ C₁-C₄-Alkanoyl, Benzoyl oder ein gegebenenfalls weitersubstituierter Halogentriazinylrest ist, 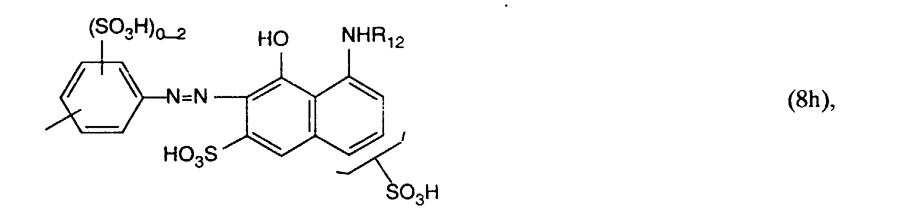 worin R₁₂ C₁-C₄-Alkanoyl, Benzoyl oder ein gegebenenfalls weitersubstituierter Halogentriazinylrest ist, 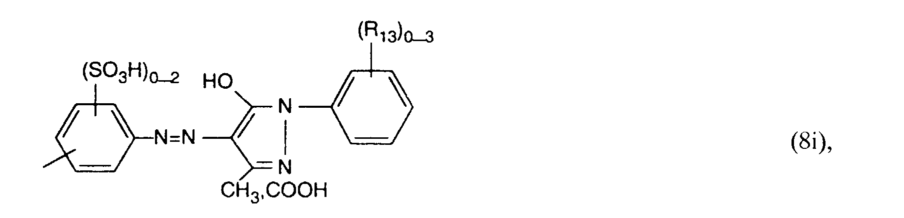 worin R₁₃ für 0 bis 3 gleiche oder verschiedene Substituenten aus der Gruppe C₁-C₄-Alkyl, C₁-C₄-Alkoxy, Halogen, Carboxy und Sulfo steht, 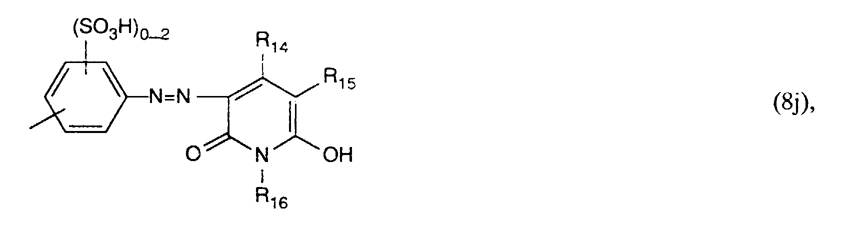 worin R₁₄ und R₁₆ unabhängig voneinander Wasserstoff, C₁-C₄-Alkyl oder Phenyl, und R₁₅ Wasserstoff, Cyano, Carbamoyl oder Sulfomethyl ist, 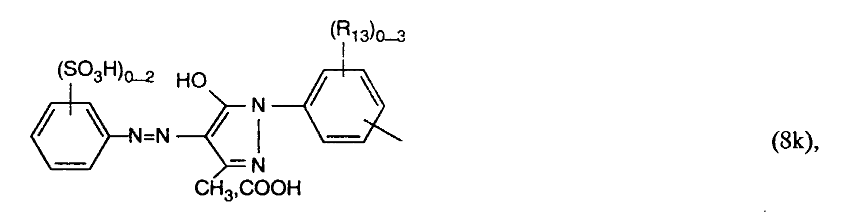 worin R₁₃ für 0 bis 3 gleiche oder verschiedene Substituenten aus der Gruppe C₁-C₄-Alkyl, C₁-C₄-Alkoxy, Halogen, Carboxy und Sulfo steht, 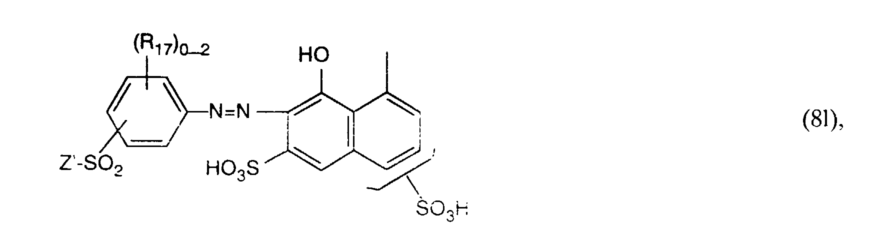 worin R₁₇ für 0 bis 2 gleiche oder verschiedene Substituenten aus der Gruppe C₁-C₄-Alkyl, C₁-C₄-Alkoxy, Halogen, Carboxy und Sulfo steht; und Z' β-Sulfatoäthyl, β-Thiosulfatoäthyl, β-Phosphatoäthyl, β-Acyloxyäthyl, β-Halogenäthyl oder Vinyl ist, 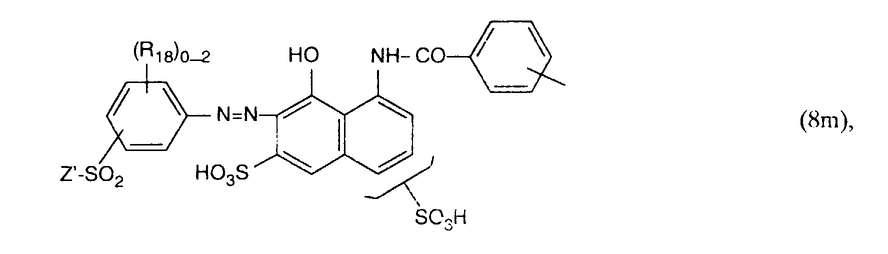 worin R₁₈ für 0 bis 2 gleiche oder verschiedene Substituenten aus der Gruppe C₁-C₄-Alkyl, C₁-C₄-Alkoxy, Halogen, Carboxy und Sulfo steht: und Z' β-Sulfatoäthyl, β-Thiosulfatoäthyl, β-Phosphatoäthyl, β-Acyloxyäthyl, β-Halogenäthyl oder Vinyl ist, 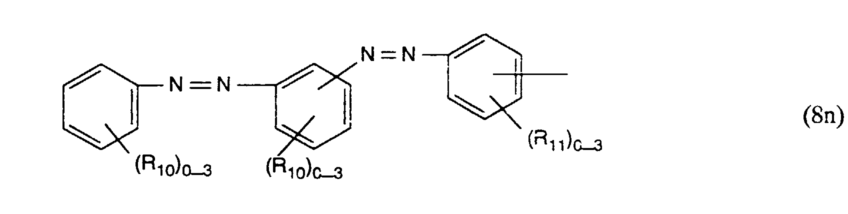 oder 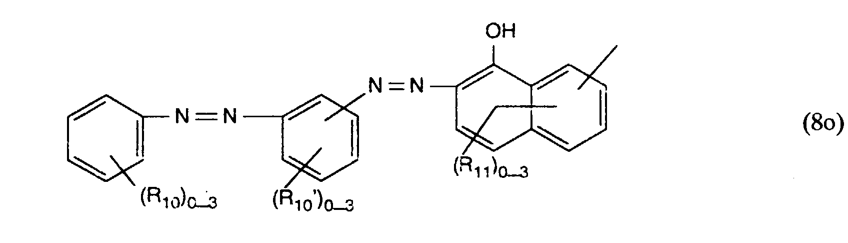 oder 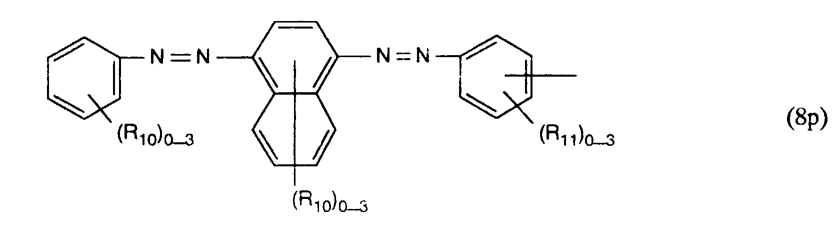 oder 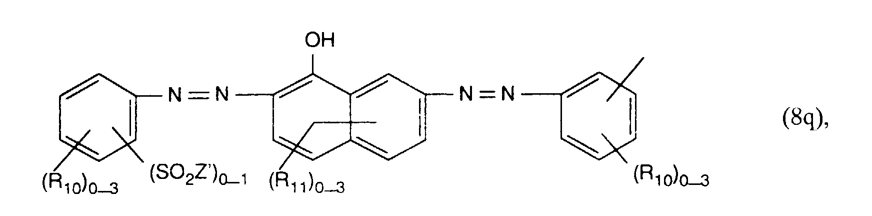 worin R₁₀ für 0 bis 3 gleiche oder verschiedene Substituenten aus der Gruppe C₁-C₄-Alkyl, C₁-C₄-Alkoxy, Halogen, Carboxy und Sulfo, R₁₀' die für R₁₀ angegebenen Bedeutungen hat und zusätzlich C₁-C₄-Hydroxyalkoxy oder C₁-C₄-Sulfatoalkoxy bedeuten kann, R₁₁ für 0 bis 3 gleiche oder verschiedene Substituenten aus der Gruppe Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo steht und Z' β-Sulfatoäthyl, β-Thiosulfatoäthyl, β-Phosphatoäthyl, β-Acyloxyäthyl, β-Halogenäthyl oder Vinyl ist.

Die Reste der Formeln (8a) bis (8q) können in den Phenyl- oder Napthylringen noch als weiteren Substituenten einen Rest der Formel -SO₂Z' enthalten, worin Z' β-Sulfatoäthyl, β-Thiosulfatoäthyl, β-Phosphatoäthyl, β-Acyloxyäthyl, β-Halogenäthyl oder Vinyl ist. Z' ist bevorzugt β-Sulfatoäthyl oder Vinyl, insbesondere Vinyl.

Bei dem Rest eines Formazanfarbstoffes handelt es sich bevorzugt um einen Farbstoffrest der Formel 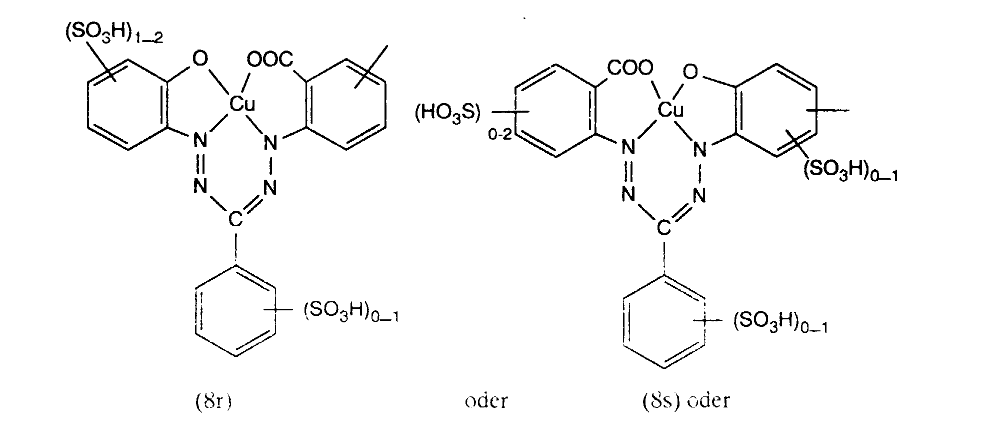 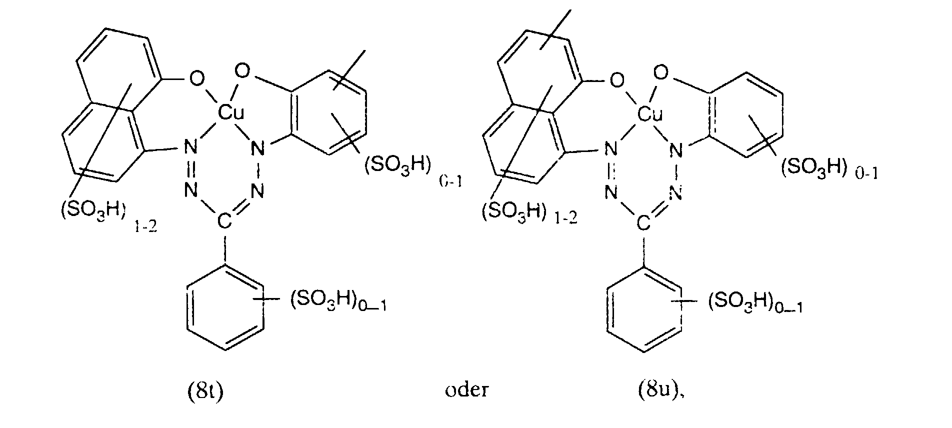 worin die Benzolkerne keine weiteren Substituenten enthalten oder durch C₁-C₄-Alkyl, C₁-C₄-Alkoxy, C₁-C₄-Alkylsulfonyl, Halogen oder Carboxy weitersubstituiert sind.

Bei dem Rest eines Phthalocyaninfarbstoffes handelt es sich bevorzugt um einen Rest der Formel 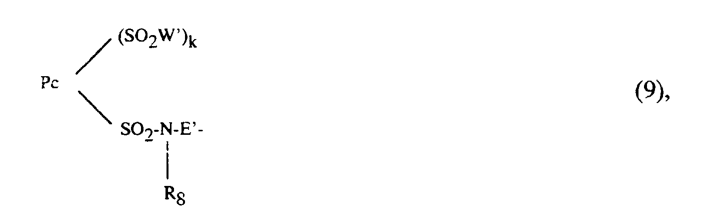 worin Pc der Rest eines Metallphthalocyanins, insbesondere der Rest eines Kupfer- oder Nickelphthalocyanins, ist; W' -OH und/oder -NR₉R₉'; R₉ und R₉' unabhängig voneinander Wasserstoff oder gegebenenfalls durch Hydroxy oder Sulfo substituiertes C₁-C₄-Alkyl; R₈ Wasserstoff oder C₁-C₄-Alkyl; E' ein gegebenenfalls durch C₁-C₄-Alkyl, Halogen, Carboxy oder Sulfo substituierter Phenylenrest oder ein C₂-C₆-Alkylenrest; und k 1 bis 3 ist. R₉ und R₉' sind vorzugsweise Wasserstoff. E' ist bevorzugt ein gegebenenfalls durch C₁-C₄-Alkyl, Halogen, Carboxy oder Sulfo substituierter Phenylenrest. Pc ist bevorzugt der Rest eines Kupferphthalocyanins.

Bei dem Rest eines Dioxazinfarbstoffes handelt es sich bevorzugt um einen Rest der Formel 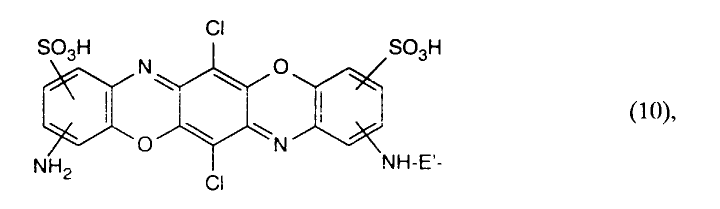 worin E' ein gegebenenfalls durch C₁-C₄-Alkyl, Halogen, Carboxy oder Sulfo substituierter Phenylenrest oder ein C₂-C₆-Alkylenrest ist und die äusseren Benzolringe in der Formel (10) keine weiteren Substituenten enthalten oder durch C₁-C₄-Alkyl, C₁-C₄-Alkoxy, Acetylamino, Nitro, Halogen, Carboxy, Sulfo oder -SO₂-Z' weitersubstituiert sind, wobei Z' β-Sulfatoethyl, β-Thiosulfatoethyl, β-Phosphatoethyl, β-Acyloxyethyl, β-Halogenethyl oder Vinyl ist.

Bei dem Rest eines Anthrachinonfarbstoffes handelt es sich bevorzugt um einen Rest der Formel 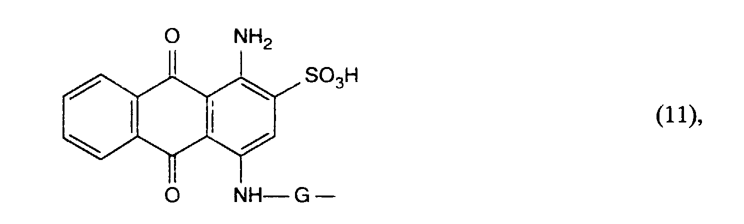 worin G ein Phenylen-, Cyclohexylen-, Phenylenmethylen- oder C₂-C₆-Alkylenrest ist, wobei der Anthrachinonkern durch eine weitere Sulfogruppe, und G als Phenylrest durch C₁-C₄-Alkyl, C₁-C₄-Alkoxy, Halogen, Carboxy oder Sulfo substituiert sein kann, und der Farbstoff vorzugsweise mindestens 2 Sulfogruppen enthält. Vorzugsweise ist G ein gegebenenfalls durch C₁-C₄-Alkyl, C₁-C₄-Alkoxy, Halogen, Carboxy oder Sulfo substituierter Phenylrest.

Ganz besonders bevorzugt sind A₁ und A₂ Reste der Formeln (8a) bis (8u), (9), (10) oder (11). Für die Reste Y₁, Y₂, R₁, R₂, R₃, R₄ und B der Reaktivfarbstoffe der Formel (1) gelten hierbei die oben angegebenen Bedeutungen und Bevorzugungen.

Als Reaktivfarbstoffe der Formel (1) enthalten die erfindungsgemässen Farbstoffmischungen insbesondere solche, worin Y₁ und Y₂ unabhängig voneinander Fluor oder Chlor bedeuten, R₁, R₂, R₃ und R₄ unabhängig voneinander Wasserstoff, Methyl oder Aethyl, insbesondere Wasserstoff, sind, B ein C₂-C₁₂-Alkylenrest ist, welcher durch 1, 2 oder 3 Reste -O- unterbrochen sein kann, und A₁ und A₂ Reste der Formeln (8a) bis (8u), (9), (10) oder (11) sind.

Ganz besonders bevorzugt enthalten die erfindungsgemässen Farbstoffmischungen mindestens zwei Reaktivfarbstoffe der Formel (1), welche sich voneinander nur hinsichtlich der Bedeutung des Restes B unterscheiden.

Besonders wichtige Farbstoffmischungen sind solche, welche mindestens zwei Reaktivfarbstoffe der Formel (1) enthalten, worin R₁, R₂, R₃ und R₄ Wasserstoff, Methyl oder Aethyl bedeuten, B ein C₂-C₁₂-Alkylenrest ist, welcher durch 1, 2 oder 3 Reste -O- unterbrochen sein kann, und sich die Reaktivfarbstoffe der Formel (1) nur hinsichtlich der Bedeutung des Brückengliedes B und/oder der Bedeutung der Reste R₂ und R₃ unterscheiden.

Ganz besonders wichtige Farbstoffmischungen sind solche, welche mindestens zwei Reaktivfarbstoffe der Formel (1) enthalten, worin R₁, R₂, R₃ und R₄ Wasserstoff bedeuten, B ein C₂-C₁₂-Alkylenrest ist, welcher durch 1, 2 oder 3 Reste -O- unterbrochen sein kann, und sich die Reaktivfarbstoffe der Formel (1) nur hinsichtlich der Bedeutung des Brückengliedes B unterscheiden.

Von ganz besonderem Interesse sind Farbstoffmischungen, welche zwei Reaktivfarbstoffe der Formel (1) enthalten, worin das Verhältnis der Reaktivfarbstoffe der Formel (1) bevorzugt 5:95 bis 95:5, insbesondere 10:90 bis 90:10 und vorzugsweise 40:60 bis 60:40 ist.

Die Reaktivfarbstoffe der Formel (1) sind bekannt oder können in Analogie zu bekannten Farbstoffen hergestellt werden.

So können die Reaktivfarbstoffe der Formel (1) erhalten werden, indem man Reste der Formeln

A₁-N(R₁)H (12a) und A₂-N(R₄)H (12b)

oder entsprechende Farbstoffvorprodukte, mindestens eine Halogentriazinverbindung und mindestens ein Diamin der Formel 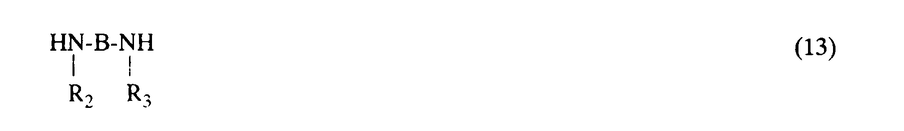 in beliebiger Reihenfolge miteinander umsetzt, wobei A₁, A₂, R₁, R₂, R₃, R₄ und B die unter Formel (1) angegebenen Bedeutungen haben, oder, im Falle der Verwendung von Farbstoffvorprodukten, die erhaltenen Zwischenprodukte in die gewünschten Farbstoffe überführt und gegebenenfalls eine weitere Umwandlungsreaktion anschliesst.

Bei der Herstellung der Endfarbstoffe aus Vorprodukten handelt es sich vor allem um Kupplungen, die zu Azofarbstoffen führen. Die Kupplungsreaktionen werden gemäss an sich bekannter Verfahren ausgeführt.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Eine Verfahrensvariante besteht darin, dass man einen der Reste der Formeln (12a) und (12b) mit einer Halogentriazinverbindung kondensiert, das erhaltene Produkt mit einem Diamin der Formel (13) kondensiert und das erhaltene Reaktionsprodukt mit dem anderen Rest der Formeln (12b) und (12a), welcher zuvor mit einer Halogentriazinverbindung kondensiert wurde, umsetzt.

Gegenstand der vorliegenden Erfindung ist ferner ein Verfahren zur Herstellung der erfindungsgemässen Farbstoffmischungen. Dies kann zum einen durch Mischen der Einzelkomponenten erfolgen, oder wie oben für die Herstellung der Reaktivfarbstoffe der Formel (1) angegeben. wobei man mindestens zwei voneinander verschiedene Reste der Formel (13) verwendet. Bevorzugt verwendet man lediglich verschiedene Diamine der Formel (13), welche sich nur hinsichtlich des Brückengliedes B unterscheiden; insbesondere zwei solche voneinander verschiedene Diamine der Formel (13).

Als Halogentriazinverbindungen verwendet man vorzugsweise Cyanurhalogenide, wie z.B. Cyanurchlorid oder Cyanurfluorid. Die Einführung einer Carboxypyridiniumverbindung erfolgt in der Regel im Anschluss an eine Kondensationsreaktion der entsprechenden Cyanurhalogenide.

Die Verbindungen der Formeln (12a), (12b), (13) sowie die Halogentriazinverbindungen sind bekannt oder können in Analogie zu bekannten Verbindungen erhalten werden.

Die einzelnen Kondensationsreaktionen erfolgen z.B. gemäss an sich bekannter Verfahren, in der Regel in wässriger Lösung, bei einer Temperatur von beispielsweise 0 bis 50°C und einem pH-Wert von z.B. 4 bis 10.

Die Farbstoffe der Formel (1) welche eine Sulfo- oder Sulfatogruppe enthalten liegen entweder in der Form ihrer freien Säure oder vorzugsweise als deren Salze vor. Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die erfindungsgemässen Farbstoffmischungen eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasern und Polyurethane, und insbesondere cellulosehaltige Fasermaterialien aller Art genannt. Solche cellulosehaltige Fasermaterialien sind beispielsweise die natürlichen Cellulosefasern, wie Baumwolle, Leinen und Hanf, sowie Zellstoff und regenerierte Cellulose. Die erfindungsgemässen Farbstoffmischungen sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern. Besonders geeignet sind die erfindungsgemässen Farbstoffmischungen zum Färben oder Bedrucken von cellulosehaltigen Fasermaterialien. Weiterhin können sie zum Färben oder Bedrucken von natürlichen oder synthetischen Polyamidfasermaterialien verwendet werden.

Die erfindungsgemässen Farbstoffmischungen lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung, fixiert werden. Besonders geeignet sind sie für das sogenannte Kaltverweilverfahren, wonach der Farbstofi zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die erfindungsgemässen Farbstoffmischungen zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffmischungen eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffmischungen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Beispiel 1: in 50 Teilen Wasser werden unter Zugabe eines Netzmittels und 5 Teilen Dinatriumhydrogenphosphat bei einer Temperatur von 0°C 19 Teile Cyanurchlorid kräftig verrührt. Dazu tropft man eine neutrale Lösung von 27 Teilen 4,6-Diaminobenzol-1,3-disulfonsäure in 200 Teilen Wasser; dabei wird der pH durch Zugabe von Natronlauge bei einem Wert von 4,5 gehalten. Nach beendeter Reaktion werden 25 Teile 32%-iger Salzsäure und 7 Teile Natriumnitrit zugegeben und 30 Minuten gerührt, der Nitritüberschuss wird mit Sulfaminsäure zerstört. Die Suspension tropft man in eine neutrale Lösung von 20 Teilen 1-Ethyl-6-hydroxy-4-methyl-2-pyridoncarbonylamid in 5() Teilen Wasser und hält dabei den pH durch Zugabe einer wässrigen Natriumhydroxidlösung bei einem Wert von 7 konstant. Anschiiessend wird eine Lösung von 1,5 Teilen Ethan-1,2-diamin und 1,8 Teilen Propan-1,3-diamin in 30 Teilen Wasser derart zugetropft, dass der pH einen Wert von 9 nicht übersteigt. Gegen Ende der Reaktion wird dann auf eine Temperatur von 40°C erhitzt. Nacn beendeter Kondensation wird das erhaltene Produkt durch Zugabe von Natriumchlorid gefällt, abgesaugt und getrocknet. Man erhält eine Farbstoffmischung, welche die in Form der freien Säure angegebenen Farbstoffe der Formeln 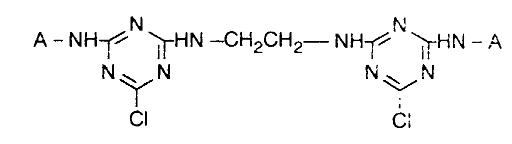 und 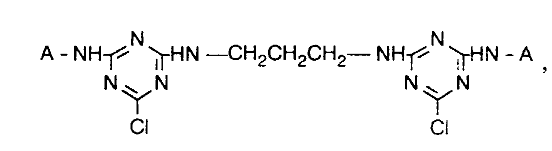 worin
A jeweils ein Rest der Formel 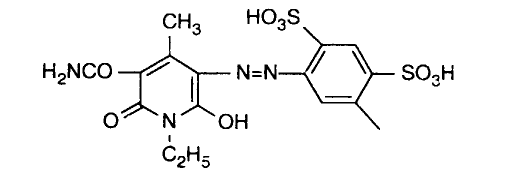 ist, in einem Verhältnis von ca. 1:1 enthält. Die erhaltene Farbstoffmischung färbt Baumwolle in brillanten gelben Farbtönen.

Beispiel 2: Zu einer neutralen Lösung von 42 Teilen 7-Amino-4-hydroxy-3-(2-sulfophenylazo)-naphthalin-2-sulfonsäure und 5 Teilen Dinatriumhydrogenphosphat in 500 Teilen Wasser werden bei einer Temperatur unterhalb von 2°C 14 Teile Cyanurfluorid zugetropft: dabei wird der pH-Wert durch Zugabe von wässriger Natriumhydroxidlösung konstant gehalten. Nach beendeter Reaktion tropft man eine Lösung von 1,8 Teilen 1-Methylethan-1,2-diamin und 1,8 Teilen Propan-1,3-diamin in 30 Teilen Wasser derart zu, dass der pH einen Wert von 9,5 nicht übersteigt und hält den pH bei einem Wert von 9,5 durch Zugabe von Natronlauge konstant. Man lässt auf Raumtemperatur erwärmen, befreit die Lösung dialytisch von Salz und dampft das erhaltene Produkt ein. Man erhält eine Farbstoffmischung, welche die in Form der freien Säure angegebenen Farbstoffe der Formeln 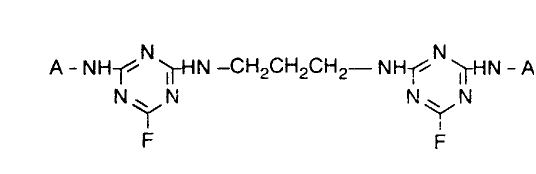 und 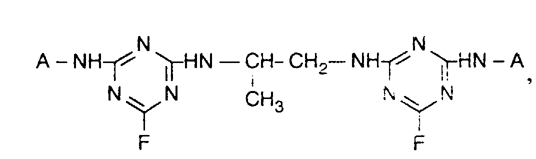 worin
A jeweils ein Rest der Formel 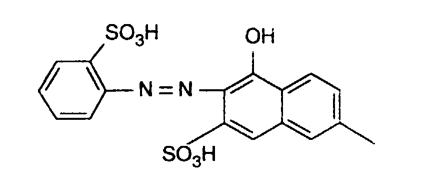 ist, in einem Verhältnis von ca. 1:1 enthält. Die erhaltene Farbstoffmischung färbt Baumwolle in brillanten orangen Farbtönen.

Beispiel 3: Zu einer neutralen Lösung von 27 Teilen 4,6-Diaminobenzol-1,3-disulfonsäure und 5 Teilen Dinatriumhydrogenphosphat in 270 Teilen Wasser werden bei einer Temperatur unterhalb von 2°C 14 Teile Cyanurfluorid zugetropft; dabei wird der pH-Wert durch Zugabe von wässriger Natriumhydroxidlösung konstant gehalten. Nach beendeter Reaktion tropft man eine Lösung von 3,6 Teilen 1-Methylethan-1,2-diamin und 3,6 Teilen Propan-1,3-diamin in 65 Teilen Wasser derart zu, dass der pH einen Wert von 7,5 nicht übersteigt, hält den pH bei einem Wert von 7.5 durch Zugabe von wässriger Natriumhydroxidlösung konstant und lässt auf Raumtemperatur erwärmen. Man erhält eine Lösung von 4-Amino-6-[4-(3-aminopropylamino)-6-fluor-[1,3,5]-triazin-2-ylamino]-benzol-1,3-disulfonsäure und 4-Amino-6-[4-(2-Amino-1-methylethylamino)-6-fluor-[1,3,5]-triazin-2-ylamino]-benzol-1,3-disulfonsäure (Lösung 1).

In 50 Teilen Wasser werden unter Zugabe eines Netzmittels und 5 Teilen Dinatriumhydrogenphosphat bei einer Temperatur von 0°C 19 Teile Cyanurchlorid kräftig verrührt. Dazu tropft man eine neutrale Lösung von 27 Teilen 4,6-Diaminobenzol-1,3-disulfonsäure in 220 Teilen Wasser; dabei wird der pH-Wert durch Zugabe von wässriger Natriumhydroxidlösung bei einem Wert von 4,5 gehalten.
Man erhält eine Lösung von 4-Amino-6-[4,6-dichlor-[1,3,5]-triazin-2-ylamino]-benzol-1,3-disulfonsäure (Lösung 2).

Lösung wird zu Lösung 1 gegeben, der pH auf einen Wert von 8,5 erhöht und mit wässriger Natriumhydroxidlösung gehalten. Gegen Ende der Reaktion erhitzt man auf eine Temperatur von 40°C. Nach beendeter Reaktion wird auf eine Temperatur von 0°C gekühlt. Dann werden 50 Teile 32%-iger Salzsäure und 14 Teile Natriumnitrit zugegeben und 30 Minuten gerührt. Die Suspension tropft man in eine neutrale Lösung von 40 Teilen 1-Ethyl-6-hydroxy-4-methyl-2-pyridoncarbonylamid in 100 Teilen Wasser und hält dabei den pH durch Zugabe von wässriger Natriumhydroxidlösung bei einem Wert von 7 konstant. Nach beendeter Kupplung wird das erhaltene Produkt durch Zugabe von Kaliumchlorid gefällt, abgesaugt und getrocknet. Man erhält eine Farbstoffmischung, welche die in Form der freien Säure angegebenen Farbstoffe der Formeln 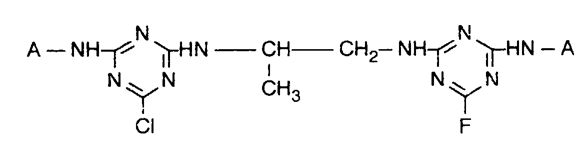 und 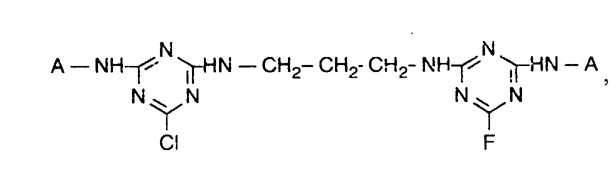 worin
A jeweils ein Rest der Formel 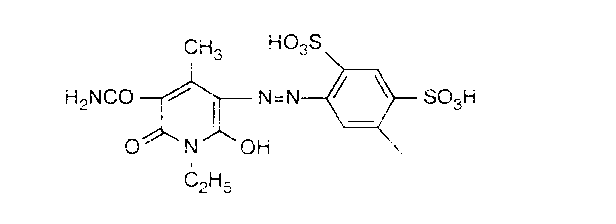 ist, in einem Verhältnis von ca. 1:1 enthält. Die erhaltene Farbstoffmischung färbt Baumwolle in brillanten gelben Farbtönen.

Beispiele 4 bis 63: Durch Mischung eines Farbstoffs der Formel 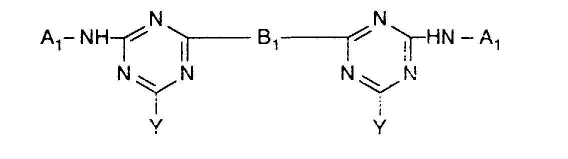 mit einem Farbstoff der Formel 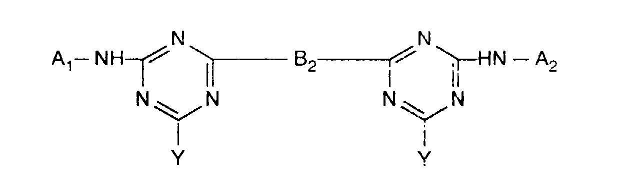 können die in der folgenden Tabelle 1 angegebenen Farbstoffmischungen erhalten werden, wobei A₁, A₂, B₁, B₂ und Y die in der Tabelle 1 angegebenen Bedeutungen haben.

Die Reste A₁ und A₂ sind mit den Grossbuchstaben A bis Z5 bezeichnet und haben in der Tabelle 1 folgende Bedeutungen:

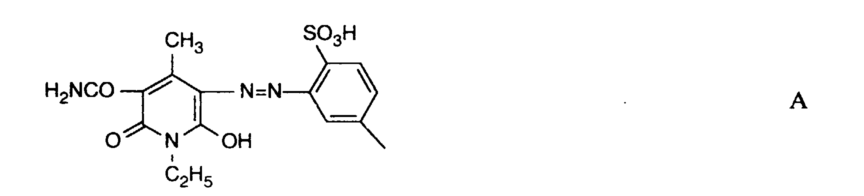

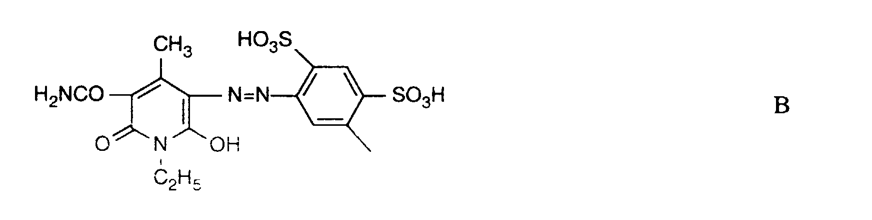

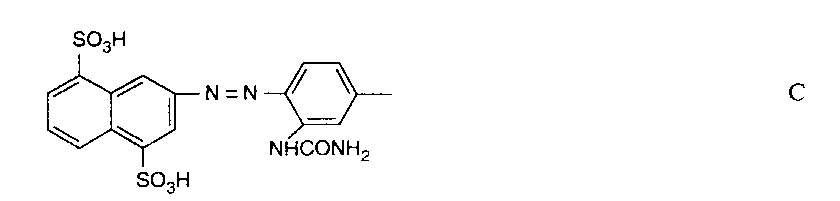

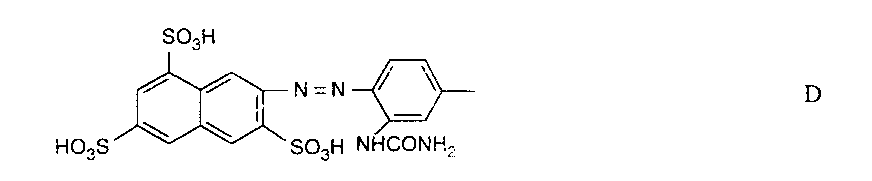

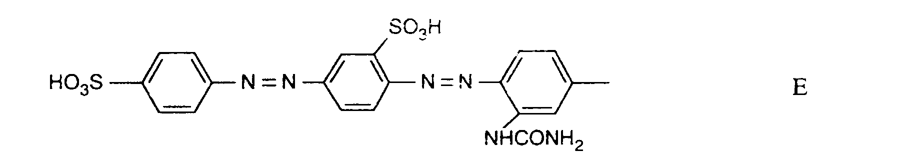

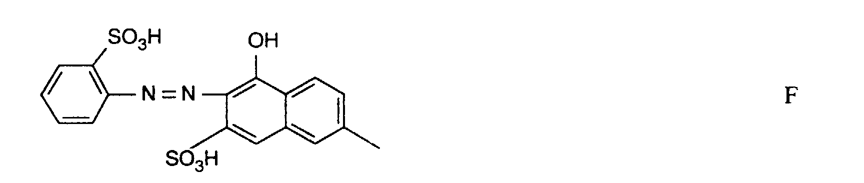

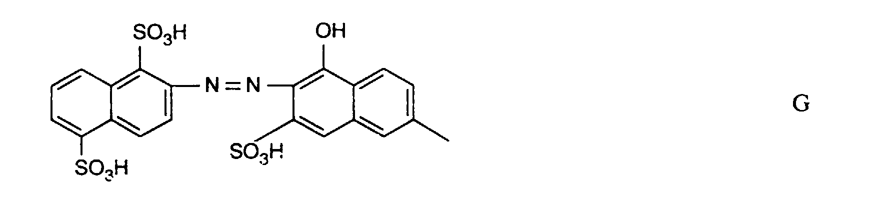

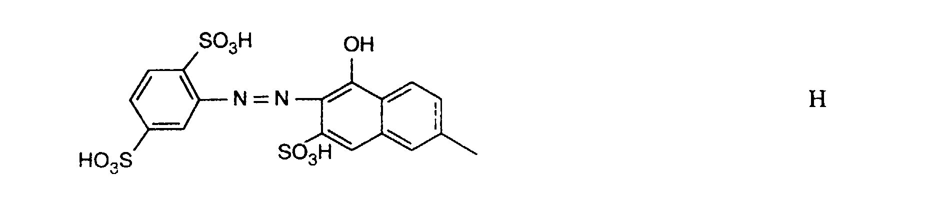

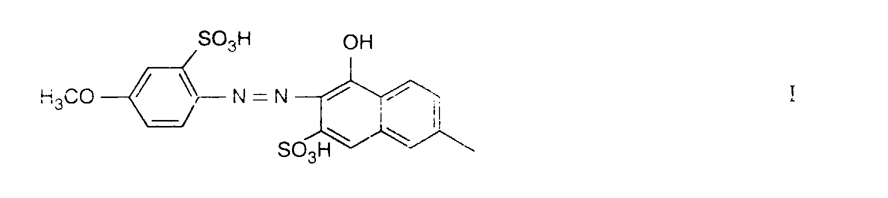

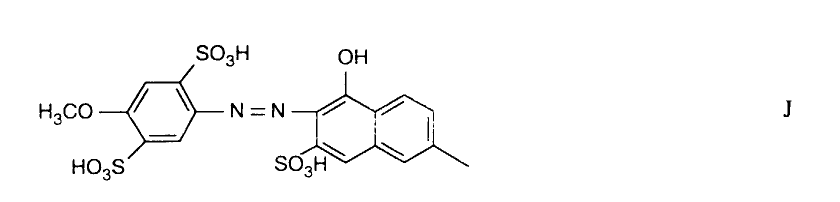

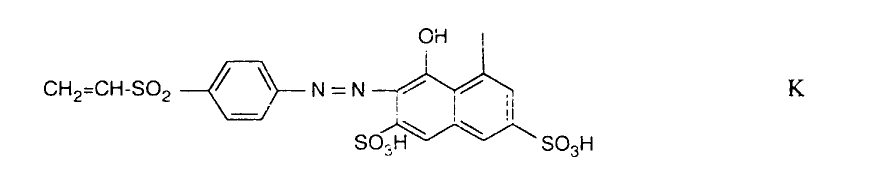

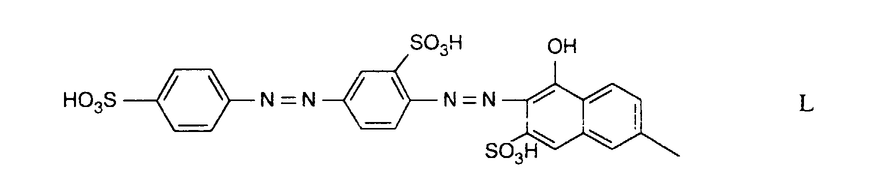

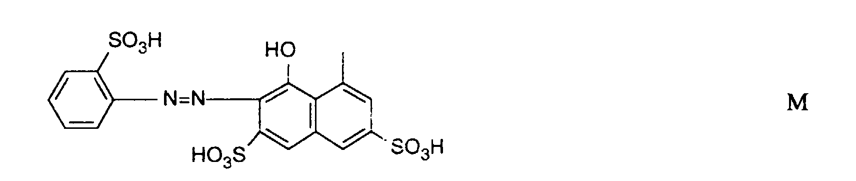

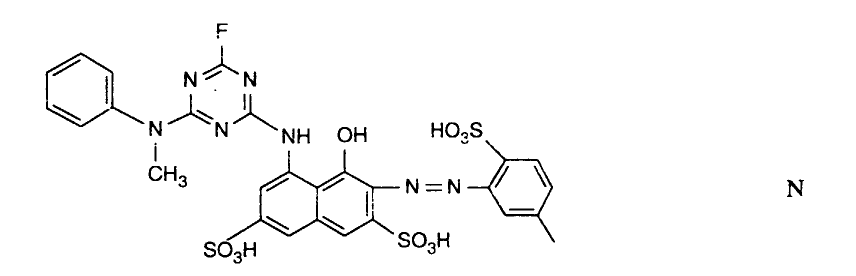

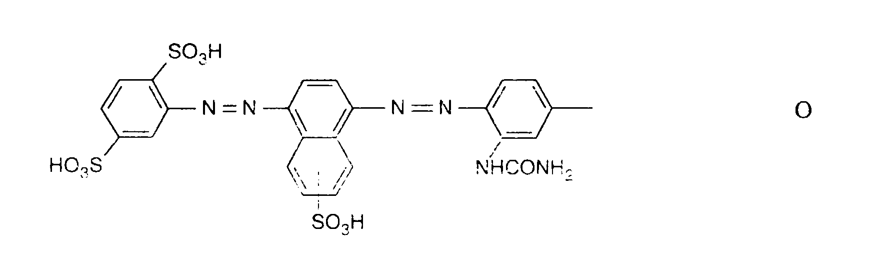

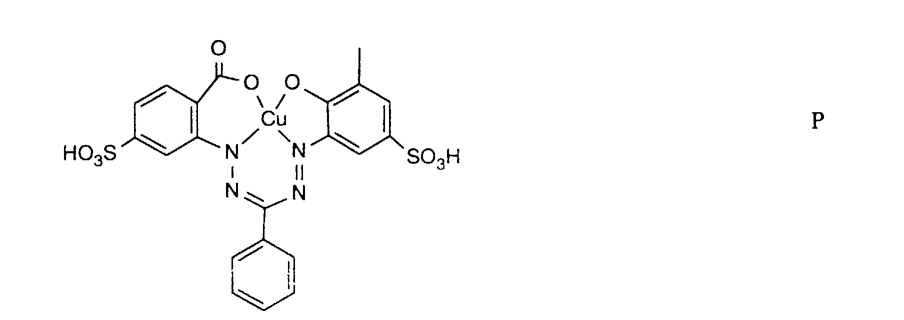

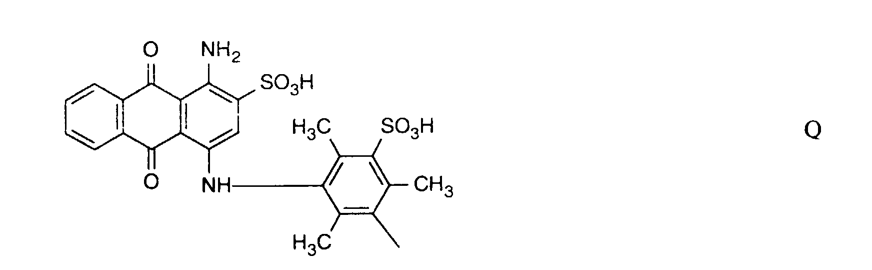

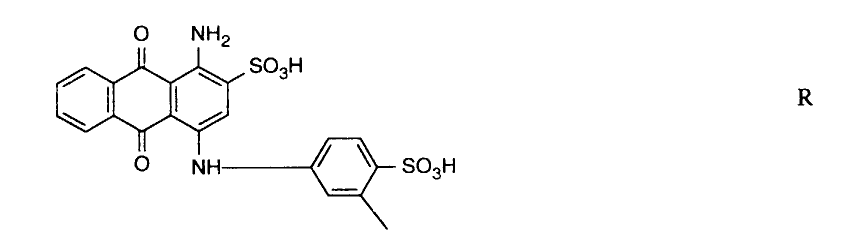

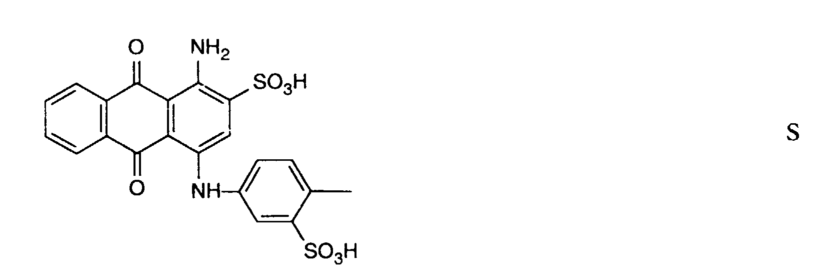

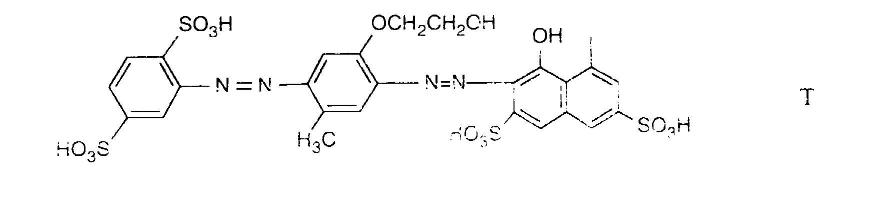

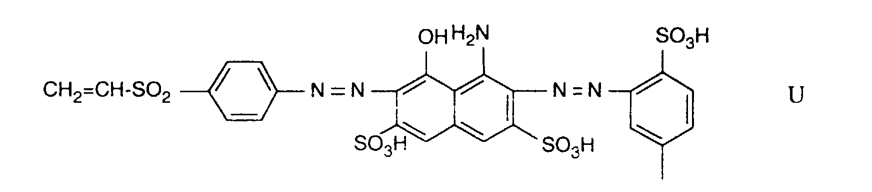

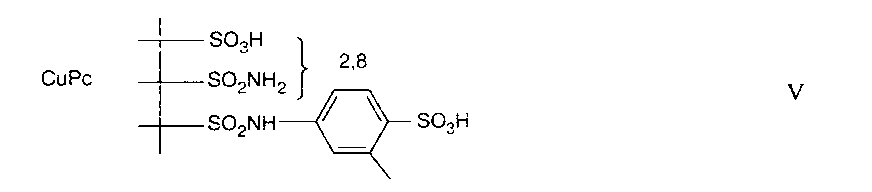

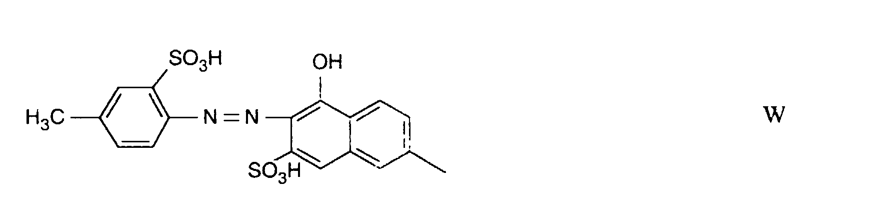

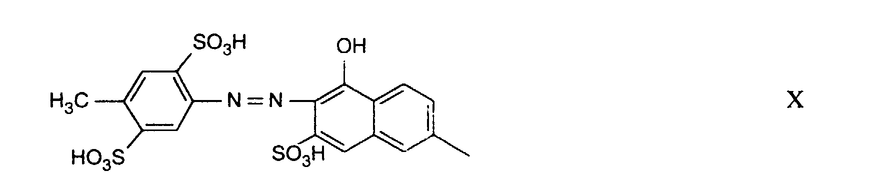

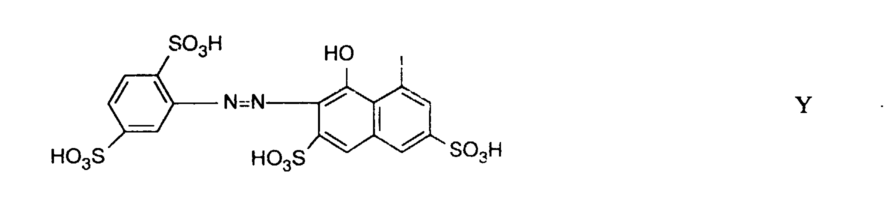

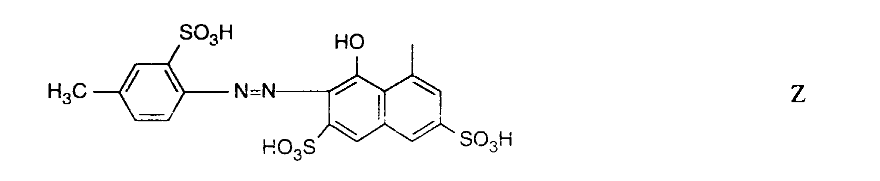

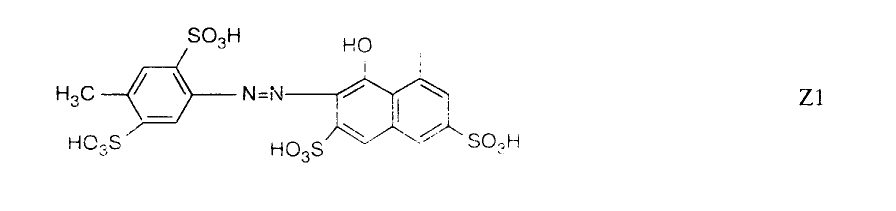

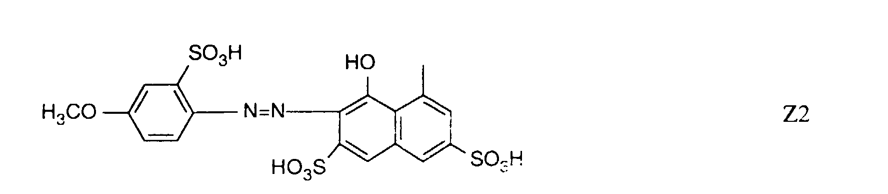

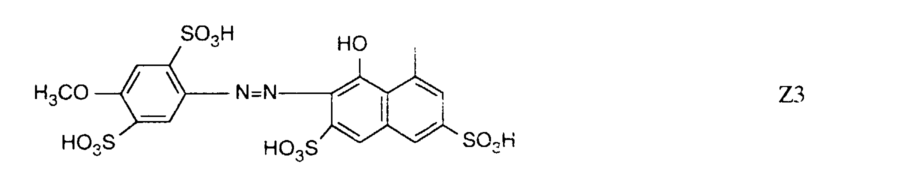

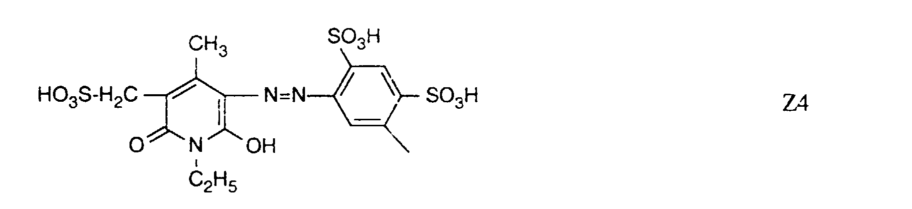

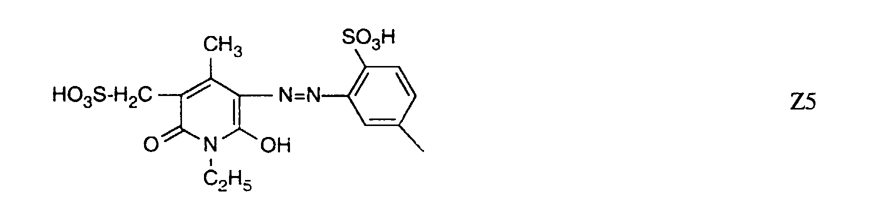

Die Reste B₁ und B₂ sind mit den Kleinbuchstaben a bis 1 bezeichnet und haben in der Tabelle 1 folgende Bedeutungen:

-NH-CH₂-CH₂-NH- a

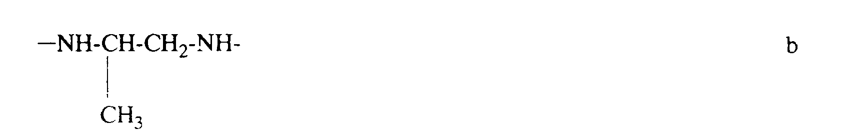

-NH-(CH₂)₃-NH- c

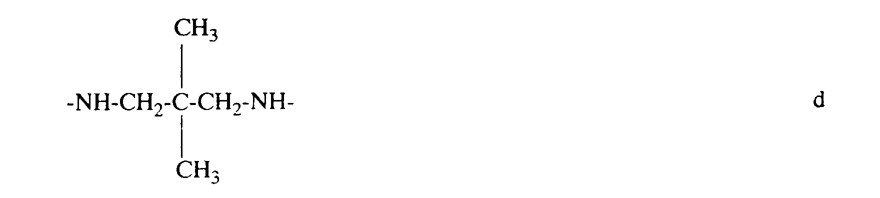

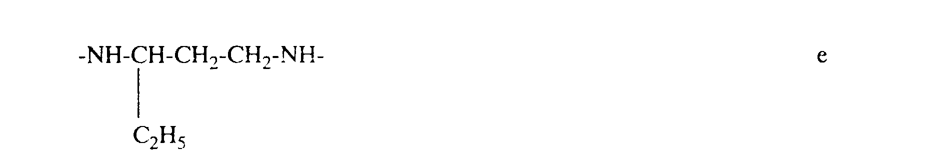

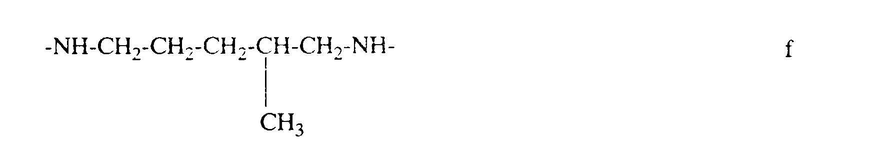

-NH-(CH₂)₆-NH- g

-NH-(CH₂)₃-O-(CH₂)₄-O-(CH₂)₃-NH- h

-NH-(CH₂)₂-O-(CH₂)₂-O-(CH₂)₂-NH- i

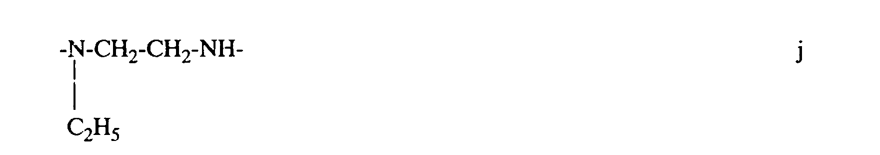

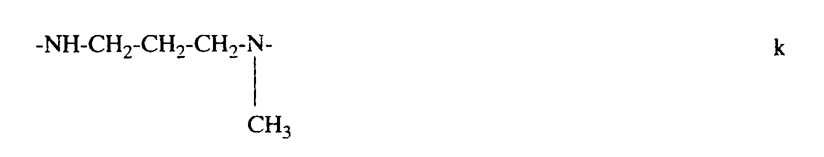

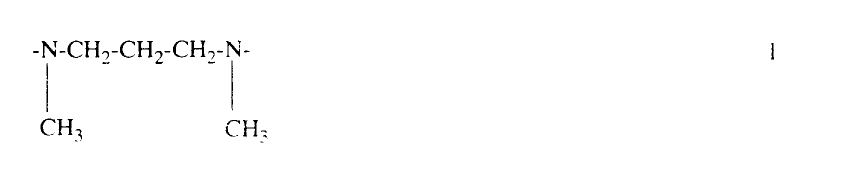

**Tabelle 1**

| Bsp. | A₁ | A₂ | B₁ | B₂ | Y | Farbton auf Baumwolle |
|---|---|---|---|---|---|---|
| 4 | A | A | a | c | Chlor | gelb |
| 5 | B | B | a | c | Chlor | gelb |
| 6 | C | C | a | c | Chlor | goldgelb |
| 7 | D | D | a | c | Chlor | goldgelb |
| 8 | E | E | a | c | Chlor | orange |
| 9 | F | F | a | c | Chlor | orange |
| 10 | G | G | a | c | Chlor | orange |
| 11 | H | H | a | c | Chlor | orange |
| 12 | I | I | a | c | Chlor | scharlach |
| 13 | J | J | a | c | Chlor | scharlach |
| 14 | K | K | a | c | Chlor | rot |
| 15 | L | L | a | c | Chlor | rot |
| 16 | M | M | a | c | Chlor | rot |
| 17 | N | N | a | c | Chlor | rot |
| 18 | O | O | a | c | Chlor | braun |
| 19 | P | P | a | c | Chlor | blau |
| 20 | Q | Q | a | c | Chlor | blau |
| 21 | R | R | a | c | Chlor | blau |
| 22 | S | S | a | c | Chlor | blau |
| 23 | T | T | a | c | Chlor | blau |
| 24 | U | U | a | c | Chlor | marineblau |
| 25 | V | V | a | c | Chlor | türkisblau |
| 26 | W | W | a | c | Chlor | scharlach |
| 27 | X | X | a | c | Chlor | scharlach |
| 28 | Y | Y | a | c | Chlor | rot |
| 29 | Z | Z | a | c | Chlor | rot |
| 30 | Z1 | Z1 | a | c | Chlor | rot |
| 31 | Z2 | Z2 | a | c | Chlor | blaustichig rot |
| 32 | Z3 | Z3 | a | c | Chlor | blaustichig rot |
| 33 | A | A | a | b | Chlor | gelb |
| 34 | B | B | a | d | Chlor | gelb |
| 35 | C | C | a | c | Chlor | goldgelb |
| 36 | D | D | a | i | Chlor | goldgelb |
| 37 | E | E | a | j | Chlor | orange |
| 38 | F | F | b | a | Chlor | orange |
| 39 | G | G | b | c | Chlor | orange |
| 40 | H | H | b | d | Chlor | orange |
| 41 | 1 | I | b | i | Chlor | scharlach |
| 42 | J | J | b | k | Chlor | scharlach |
| 43 | K | K | b | 1 | Chlor | rot |
| 44 | L | L | c | a | Chlor | rot |
| 45 | M | M | c | b | Chlor | rot |
| 46 | N | N | c | d | Chlor | rot |
| 47 | O | O | c | i | Chlor | braun |
| 48 | P | P | c | k | Chlor | blau |
| 49 | Q | Q | c | 1 | Chlor | blau |
| 50 | R | R | d | a | Chlor | blau |
| 51 | S | S | d | b | Chlor | blau |
| 52 | T | T | d | c | Chlor | blau |
| 53 | U | U | e | a | Chlor | marineblau |
| 54 | V | V | i | a | Chlor | türkisblau |
| 55 | W | W | i | b | Chlor | scharlach |
| 56 | X | X | i | c | Chlor | scharlach |
| 57 | Y | Y | j | a | Chlor | rot |
| 58 | Z | Z | k | b | Chlor | rot |
| 59 | Z1 | Z1 | k | c | Chlor | rot |
| 60 | Z2 | Z2 | 1 | b | Chlor | blaustichig rot |
| 61 | Z3 | Z3 | 1 | c | Chlor | blaustichig rot |
| 62 | Z4 | Z4 | a | c | Chlor | gelb |
| 63 | Z5 | Z5 | a | c | Chlor | gelb |

In analoger Weise zu den Beispielen 4 bis 63 können entsprechende Farbstoffmischungen erhalten werden, worin Y statt Chlor die Bedeutung Fluor hat.

Die in Tabelle 1 angegebenen Farbstoffmischungen, worin sich die Einzelfarbstoffe nur hinsichtlich der Bedeutungen der Brückenglieder B₁ und B₂ unterscheiden, können auch in analoger Weise zu Beispiel 3 erhalten werden.

### Färbevorschrift

2 Teile der gemäss Beispiel 1 erhaltenen Farbstoffmischung werden in 400 Teilen Wasser gelöst: dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Druckvorschrift

3 Teile der gemäss Beispiel 2 erhaltenen Farbstoffmischung werden unter schnellem Rühren in 100 Teile einer Stammverdickung, enthaltend 50 Teiie 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Farbstoffmischungen, dadurch gekennzeichnet, dass sie mindestens zwei Reaktivfarbstoffe der Formel 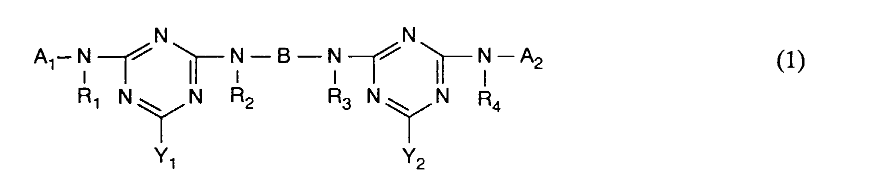 enthalten, worin
A₁ und A₂ identische Bedeutungen haben und der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes sind,
R₁, R₂, R₃ und R₄ unabhängig voneinander Wasserstoff oder gegebenenfalls substituiertes C₁-C₄-Alkyl sind,
B ein C₂-C₁₂-Alkylenrest ist, welcher durch 1, 2 oder 3 Reste -O- unterbrochen sein kann,
Y₁ und Y₂ unabhängig voneinander Halogen oder Carboxypyridinium bedeuten, und sich die genannten Reaktivfarbstoffe der Formel (1) voneinander nur hinsichtlich der Bedeutungen der Reste R₂, R₃ und/oder B unterscheiden,
mit der Massgabe, dass die Farbstoffmischungen nicht zwei oder mehr der Farbstoffe der Formeln 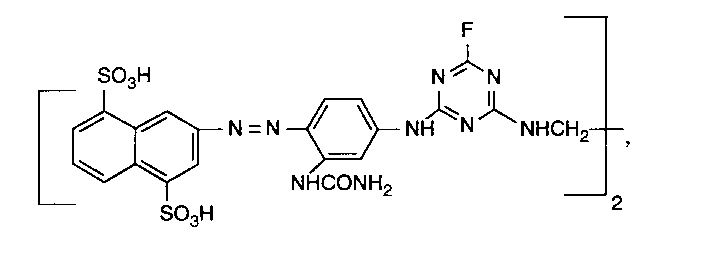 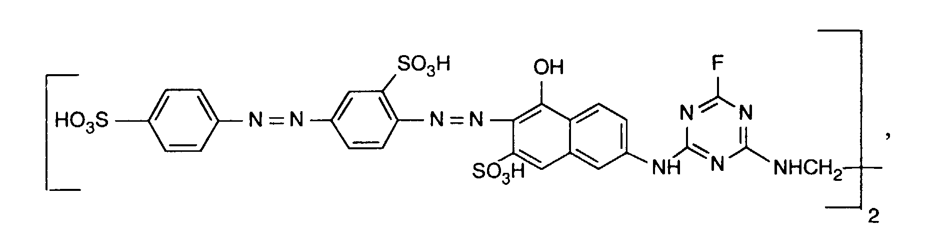 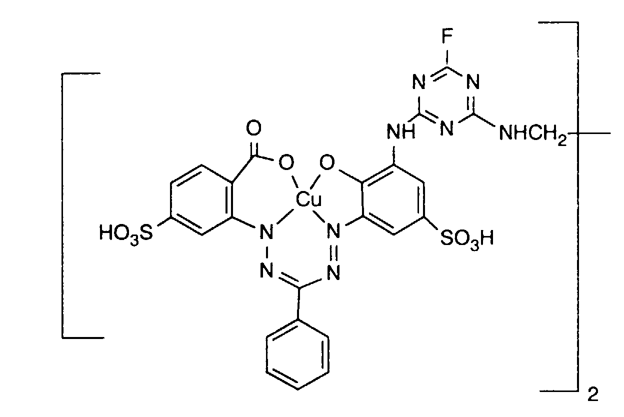 und 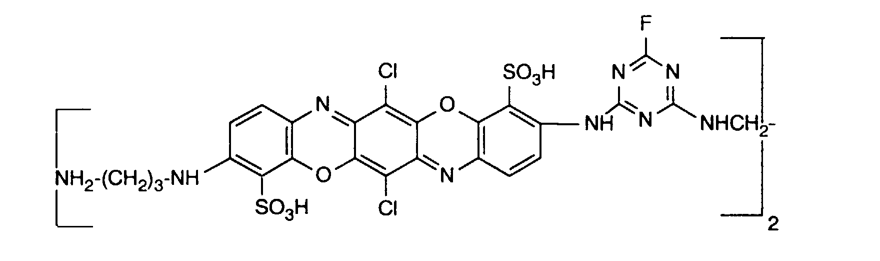 enthalten.

2. Farbstoffmischungen gemäss Anspruch 1, dadurch gekennzeichnet, dass Y₁ und Y₂ unabhängig voneinander Fluor oder Chlor bedeuten.

3. Farbstoffmischungen gemäss einem der Ansprüche 1 und 2, dadurch gekennzeichnet, dass R₁, R₂, R₃ und R₄ unabhängig voneinander Wasserstoff, Methyl oder Aethyl, insbesondere Wasserstoff, sind.

4. Farbstoffmischungen gemäss einem der Ansprüche 1 bis 3, dadurch gekennzeichnet, dass B ein C₂-C₆-Alkylenrest ist.

5. Farbstoffmischungen gemäss einem der Ansprüche 1 bis 4, dadurch gekennzeichnet, dass A₁ und A₂ der Rest eines Monoazo-, Disazo-, Anthrachinon-, Dioxazin-, Phthalocyanin- oder Formazanfarbstoffes sind.

6. Farbstoffmischungen gemäss einem der Ansprüche 1 bis 5, dadurch gekennzeichnet, dass A₁ und A₂ Reste der Formeln 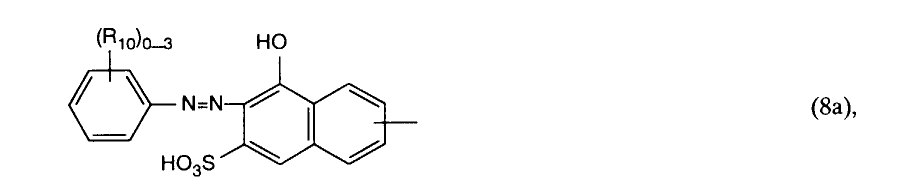 worin R₁₀ für 0 bis 3 gleiche oder verschiedene Substituenten aus der Gruppe C₁-C₄-Alkyl, C₁-C₄-Alkoxy, Halogen, Carboxy und Sulfo steht, 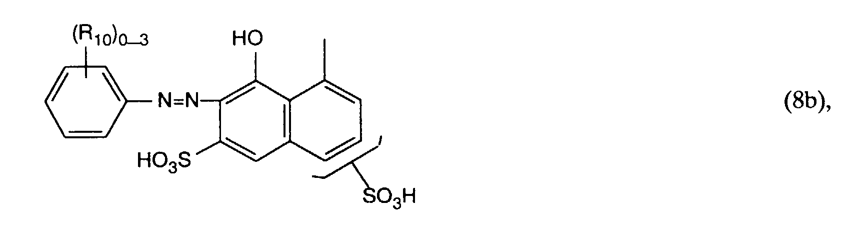 worin R₁₀ für 0 bis 3 gleiche oder verschiedene Substituenten aus der Gruppe C₁-C₄-Alkyl, C₁-C₄-Alkoxy, Halogen, Carboxy und Sulfo steht, 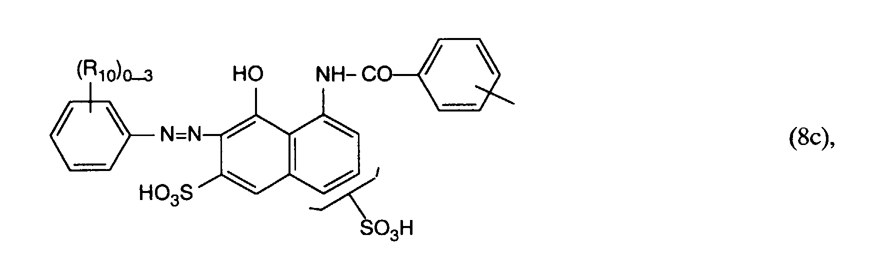 worin R₁₀ für 0 bis 3 gleiche oder verschiedene Substituenten aus der Gruppe C₁-C₄-Alkyl, C₁-C₄-Alkoxy, Halogen, Carboxy und Sulfo steht, 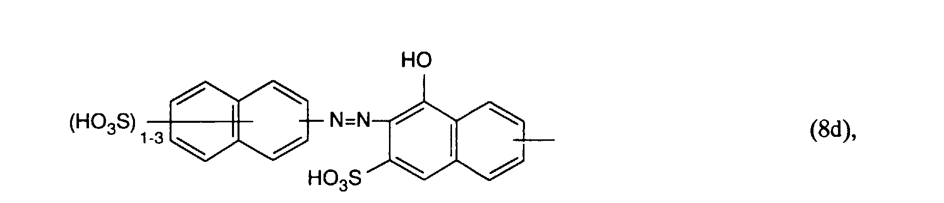 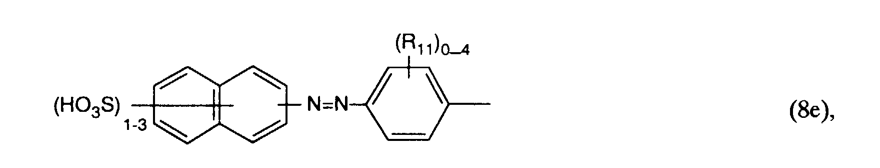 worin R₁₁ für 0 bis 4 gleiche oder verschiedene Substituenten aus der Gruppe Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo steht, 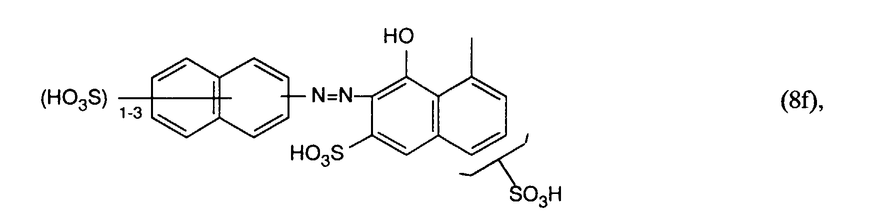 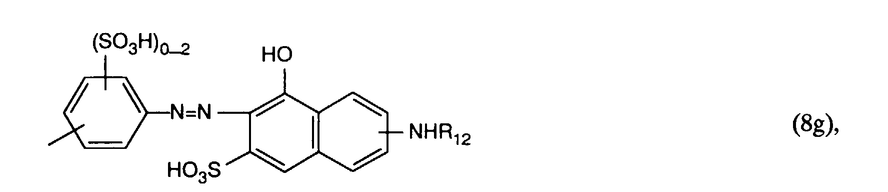 worin R₁₂ C₁-C₄-Alkanoyl, Benzoyl oder ein gegebenenfalls weitersubstituierter Halogentriazinylrest ist, 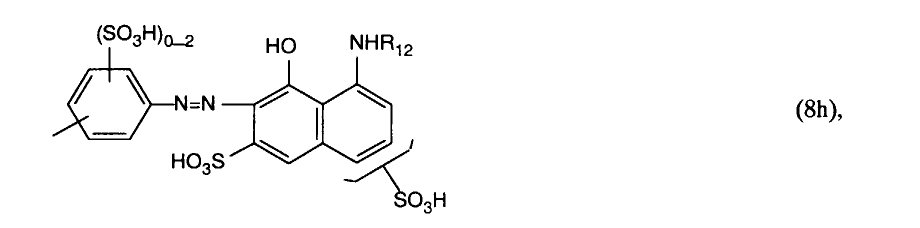 worin R₁₂ C₁-C₄-Alkanoyl, Benzoyl oder ein gegebenenfalls weitersubstituierter Halogentriazinylrest ist, 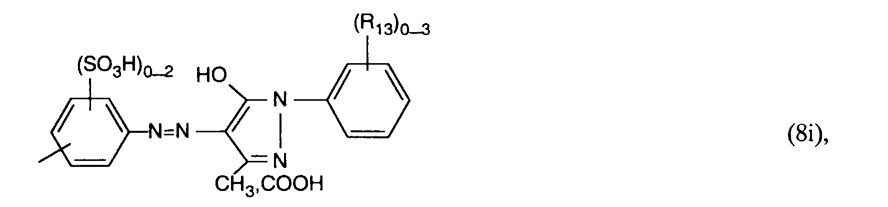 worin R₁₃ für 0 bis 3 gleiche oder verschiedene Substituenten aus der Gruppe C₁-C₄-Alkyl, C₁-C₄-Alkoxy, Halogen, Carboxy und Sulfo steht, 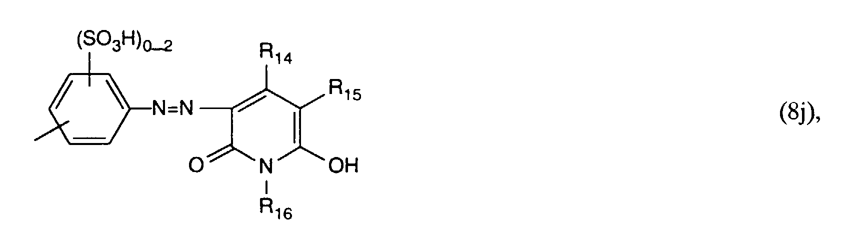 worin R₁₄ und R₁₆ unabhängig voneinander Wasserstoff, C₁-C₄-Alkyl oder Phenyl, und R₁₅ Wasserstoff, Cyano, Carbamoyl oder Sulfomethyl ist, 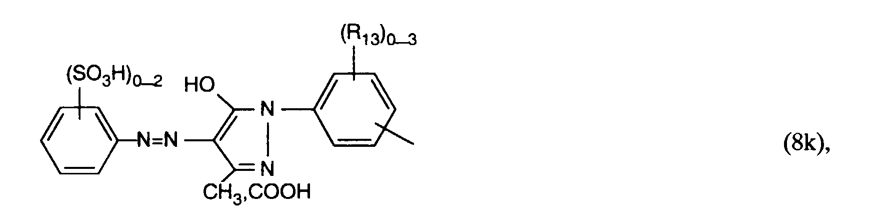 worin R₁₃ für 0 bis 3 gleiche oder verschiedene Substituenten aus der Gruppe C₁-C₄-Alkyl, C₁-C₄-Alkoxy, Halogen, Carboxy und Sulfo steht, 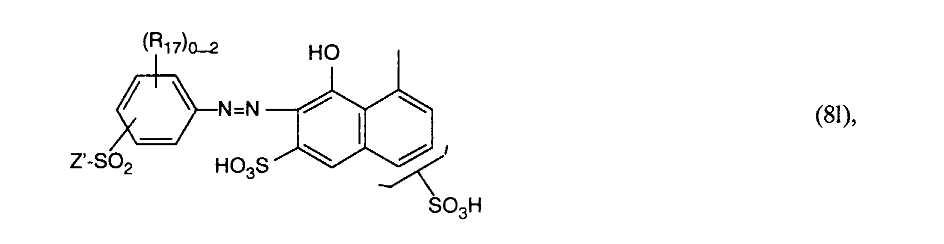 worin R₁₇ für 0 bis 2 gleiche oder verschiedene Substituenten aus der Gruppe C₁-C₄-Alkyl, C₁-C₄-Alkoxy, Halogen, Carboxy und Sulfo steht; und Z' β-Sulfatoäthyl, β-Thiosulfatoäthyl, β-Phosphatoäthyl, β-Acyloxyäthyl, β-Halogenäthyl oder Vinyl ist, 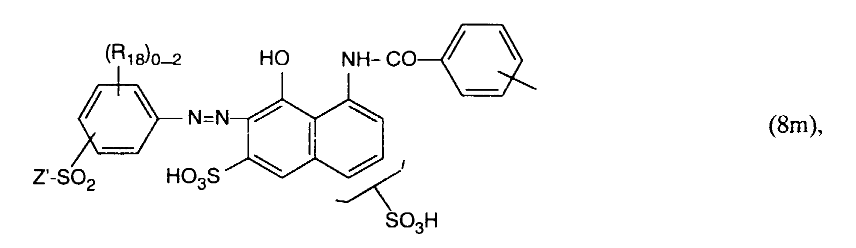 worin R₁₈ für 0 bis 2 gleiche oder verschiedene Substituenten aus der Gruppe C₁-C₄-Alkyl, C₁-C₄-Alkoxy, Halogen, Carboxy und Sulfo steht; und Z' β-Sulfatoäthyl, β-Thiosulfatoäthyl, β-Phosphatoäthyl, β-Acyloxyäthyl, β-Halogenäthyl oder Vinyl ist, 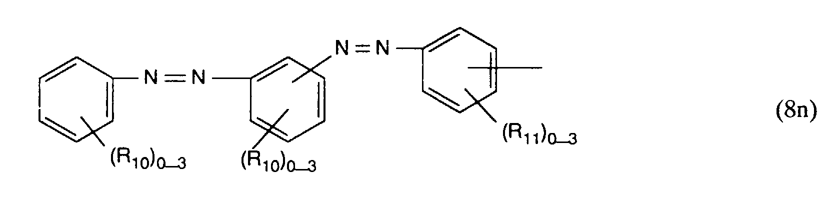 oder 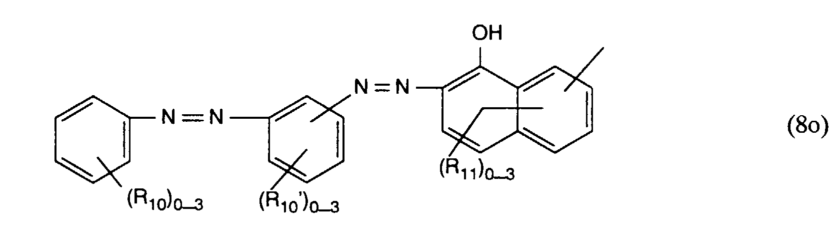 oder 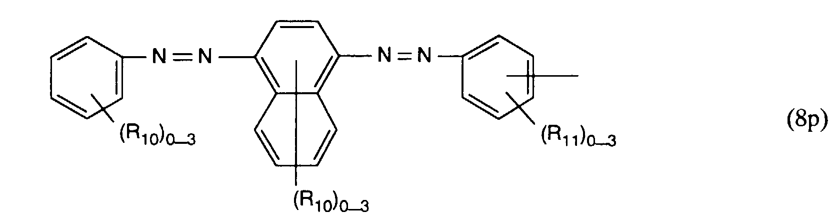 oder 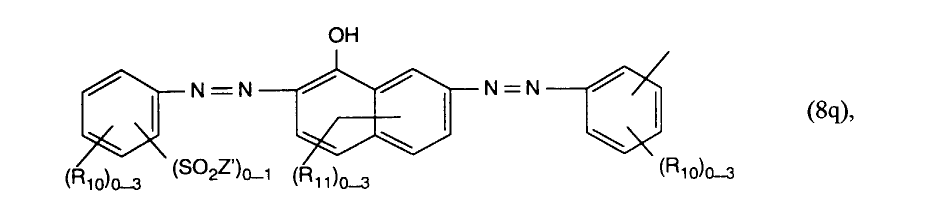 worin R₁₀ für 0 bis 3 gleiche oder verschiedene Substituenten aus der Gruppe C₁-C₄-Alkyl, C₁-C₄-Alkoxy, Halogen, Carboxy und Sulfo, R₁₀' die für R₁₀ angegebenen Bedeutungen hat und zusätzlich C₁-C₄-Hydroxyalkoxy oder C₁-C₄-Sulfatoalkoxy bedeuten kann, R₁₁ für 0 bis 3 gleiche oder verschiedene Substituenten aus der Gruppe Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo steht und Z' β-Sulfatoäthyl, β-Thiosulfatoäthyl, β-Phosphatoäthyl, β-Acyloxyäthyl, β-Halogenäthyl oder Vinyl ist, 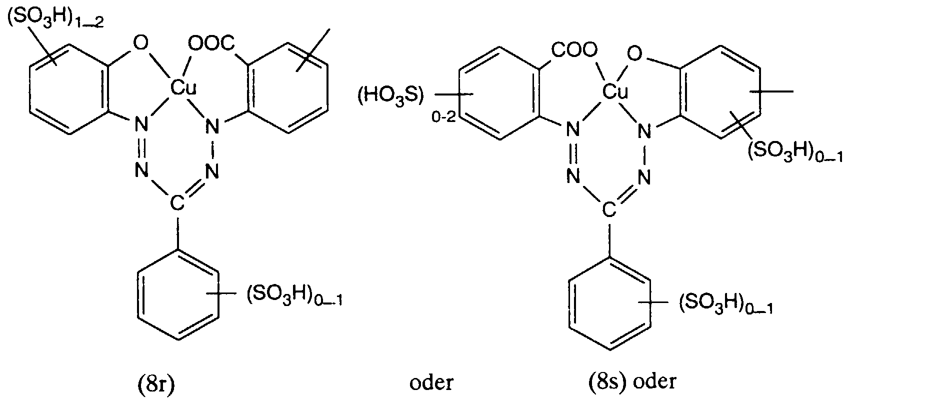 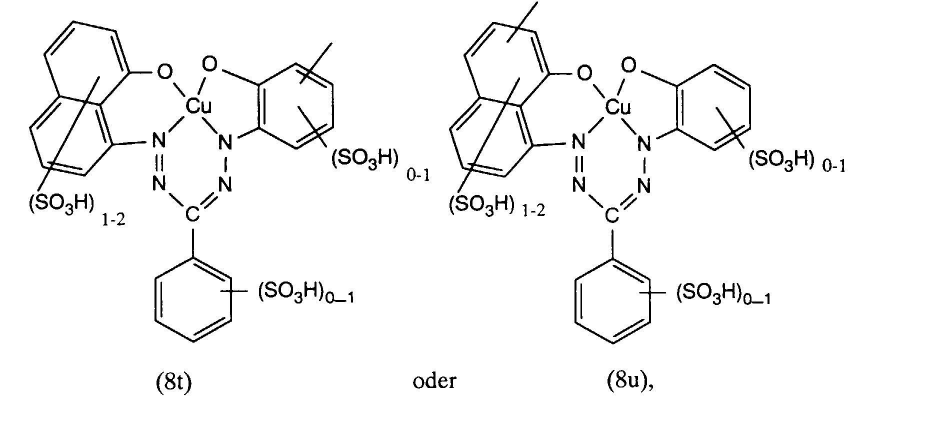 worin die Benzolkerne keine weiteren Substituenten enthalten oder durch C₁-C₄-Alkyl, C₁-C₄-Alkoxy, C₁-C₄-Alkylsulfonyl, Halogen oder Carboxy weitersubstituiert sind, 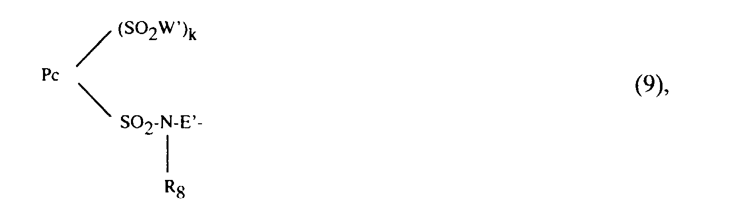 worin Pc der Rest eines Metallphthalocyanins, insbesondere der Rest eines Kupfer- oder Nickelphthalocyanins, ist; W' -OH und/oder -NR₉R₉'; R₉ und R₉' unabhängig voneinander Wasserstoff oder gegebenenfalls durch Hydroxy oder Sulfo substituiertes C₁-C₄-Alkyl; R₈ Wasserstoff oder C₁-C₄-Alkyl; E' ein gegebenenfalls durch C₁-C₄-Alkyl, Halogen, Carboxy oder Sulfo substituierter Phenylenrest oder ein C₂-C₆-Alkylenrest; und k 1 bis 3 ist, 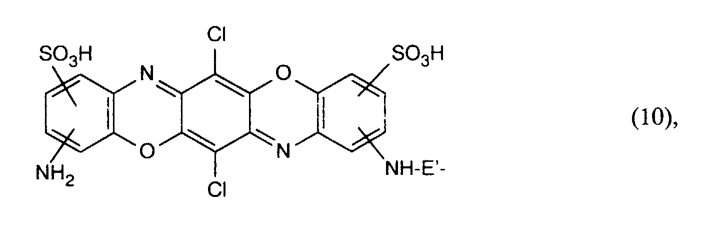 worin E' ein gegebenenfalls durch C₁-C₄-Alkyl, Halogen, Carboxy oder Sulfo substituierter Phenylenrest oder ein C₂-C₆-Alkylenrest ist und die äusseren Benzolringe in der Formel (10) keine weiteren Substituenten enthalten oder durch C₁-C₄-Alkyl, C₁-C₄-Alkoxy, Acetylamino, Nitro, Halogen, Carboxy, Sulfo oder -SO₂-Z' weitersubstituiert sind, wobei Z' β-Sulfatoethyl, β-Thiosulfatoethyl, β-Phosphatoethyl, β-Acyloxyethyl, β-Halogenethyl oder Vinyl ist, oder 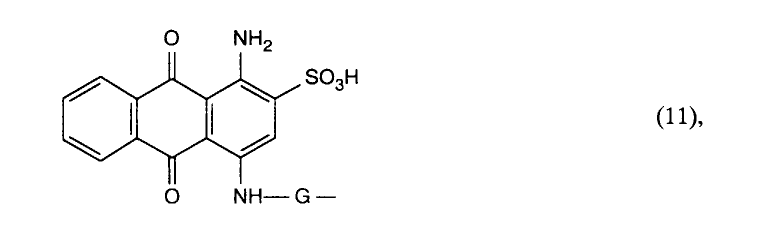 worin G ein Phenylen-, Cyclohexylen-, Phenylenmethylen- oder C₂-C₆-Alkylenrest ist, wobei der Anthrachinonkern durch eine weitere Sulfogruppe, und G als Phenylrest unsubstituiert oder C₁-C₄-Alkyl, C₁-C₄-Alkoxy, Halogen, Carboxy oder Sulfo substituiert ist, sind.

7. Farbstoffmischungen gemäss einem der Ansprüche 1 bis 6, dadurch gekennzeichnet, dass die Reste A₁ und A₂ jeweils mindestens eine Sulfogruppe enthalten.

8. Farbstoffmischungen gemäss Anspruch 1, dadurch gekennzeichnet, dass sie mindestens zwei Reaktivfarbstoffe der Formel (1) enthalten, welche sich nur hinsichtlich der Bedeutung des Brückengliedes B unterscheiden.

9. Farbstoffmischungen gemäss einem der Ansprüche 1 bis 8, dadurch gekennzeichnet, dass sie mindestens zwei Reaktivfarbstoffe der Formel (1) enthalten, worin R₁, R₂, R₃ und R₄ Wasserstoff bedeuten, B ein C₂-C₁₂-Alkylenrest ist, welcher durch 1, 2 oder 3 Reste -O- unterbrochen sein kann, und sich die Reaktivfarbstoffe der Formel (1) nur hinsichtlich der Bedeutung des Brückengliedes B unterscheiden.

10. Verfahren zur Herstellung von Farbstoffmischungen gemäss Anspruch 1, dadurch gekennzeichnet, dass man Reste der Formeln
A₁-N(R₁)H (12a) und A₂-N(R₄)H (12b)
oder entsprechende Farbstoffvorprodukte, mindestens eine Halogentriazinverbindung und mindestens ein Diamin der Formel 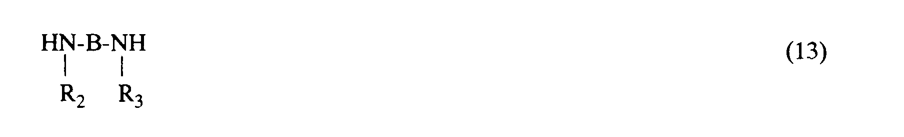 in beliebiger Reihenfolge miteinander umsetzt, wobei A₁, A₂, R₁, R₂, R₃, R₄ und B die in Anspruch 1 angegebenen Bedeutungen haben, oder, im Falle der Verwendung von Farbstoffvorprodukten, die erhaltenen Zwischenprodukte in die gewünschten Farbstoffe überführt und gegebenenfalls eine weitere Umwandlungsreaktion anschliesst, wobei man mindestens zwei voneinander verschiedene Reste der Formel (13) verwendet.

11. Verwendung der Farbstoffmischungen gemäss einem der Ansprüche 1 bis 9 bzw. der gemäss Anspruch 10 erhaltenen Farbstoffmischungen zum Färben oder Bedrucken von hydroxylgruppenhaltigen oder stickstoffhaltigen Fasermaterialien.

12. Verwendung gemäss Anspruch 11 zum Färben oder Bedrucken von cellulosehaltigen Fasermaterialien oder natürlichen oder synthetischen Polyamidfasermaterialien.

## Claims

1. A dye mixture which comprises at least two reactive dyes of the formula 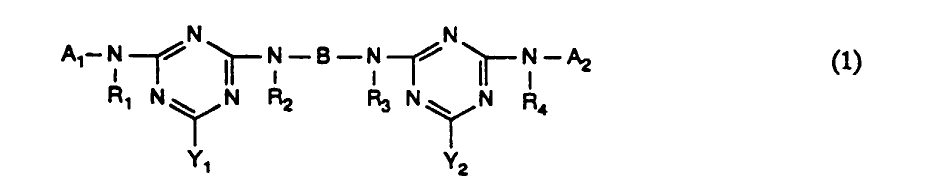 in which
A₁ and A₂ are identical and are the radical of a monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide dye,
R₁, R₂, R₃ and R₄ independently of one another are hydrogen or substituted or unsubstituted C₁-C₄alkyl,
B is a C₂-C₁₂alkylene radical which can be interrupted by 1, 2 or 3 radicals -O-,
Y₁ and Y₂ independently of one another are halogen or carboxypyridinium, and the said reactive dyes of the formula (1) differ from one another only in terms of the definitions of the radicals R₂, R₃ and B,
with the proviso that the dye mixture does not comprise two or more of the dyes of the formulae 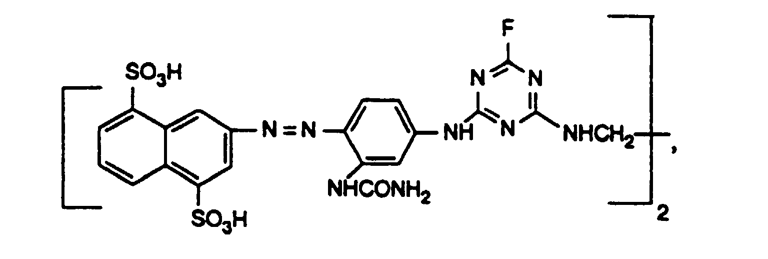 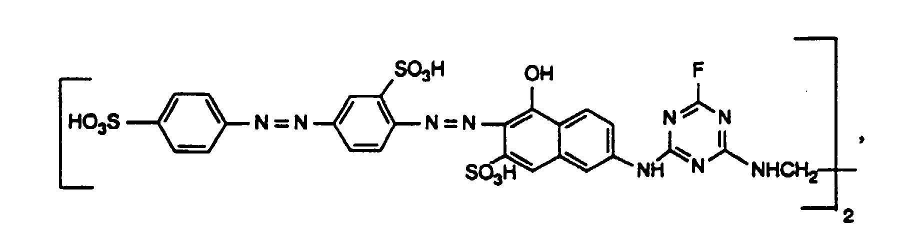 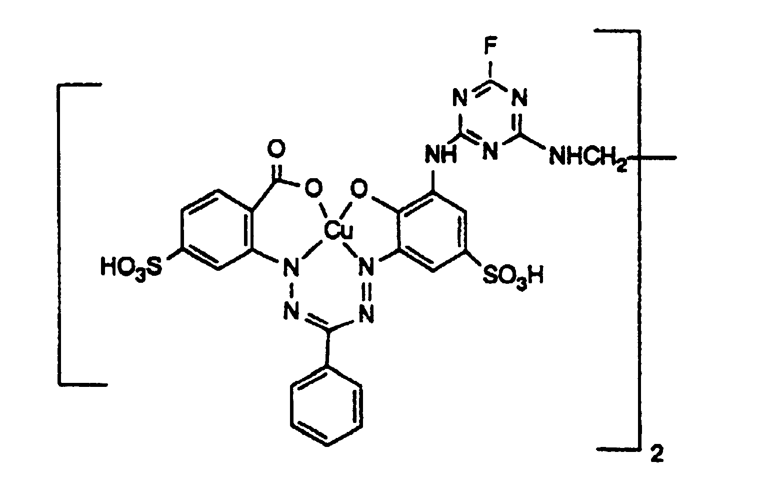 and

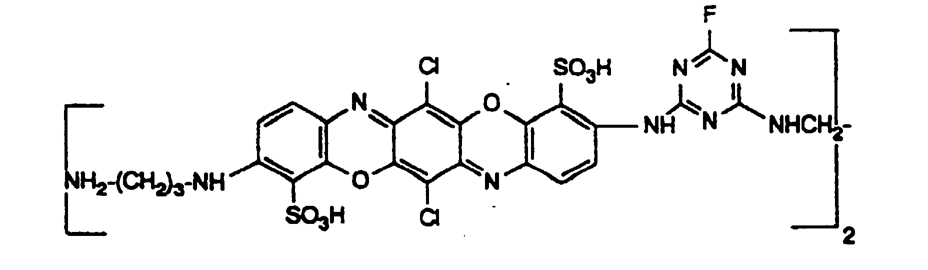

2. A dye mixture according to claim 1, wherein Y₁ and Y₂ independently of one another are fluorine or chlorine.

3. A dye mixture according to claim 1 or 2, wherein
R₁, R₂, R₃ and R₄ independently of one another are hydrogen, methyl or ethyl, in particular hydrogen.

4. A dye mixture according to any one of claims 1 to 3, wherein B is a C₂-C₆alkylene radical.

5. A dye mixture according to any one of claims 1 to 4, wherein A₁ and A₂ are the radical of a monoazo, disazo, anthraquinone, dioxazine, phthalocyanine or formazan dye.

6. A dye mixture according to any one of claims 1 to 5, wherein A₁ and A₂ are radicals of the formulae 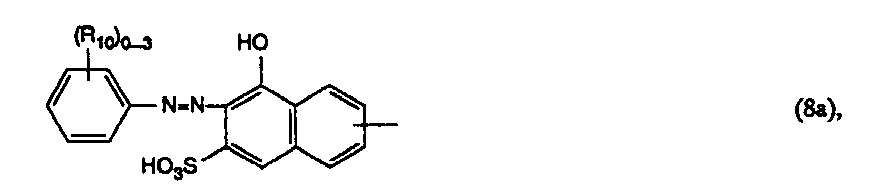 in which R₁₀ is 0 to 3 identical or different substituents from the group C₁-C₄alkyl, C₁-C₄alkoxy, halogen, carboxyl and sulfo, 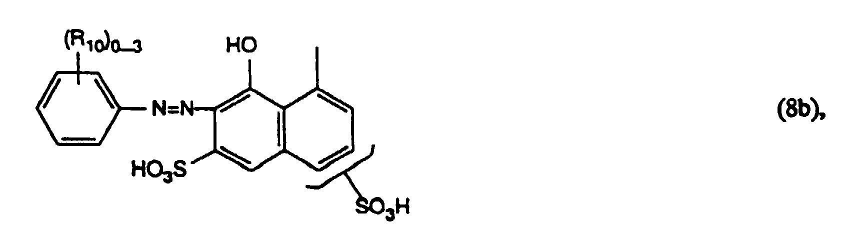 in which R₁₀ is 0 to 3 identical or different substituents from the group C₁-C₄alkyl, C₁-C₄alkoxy, halogen, carboxyl and sulfo, 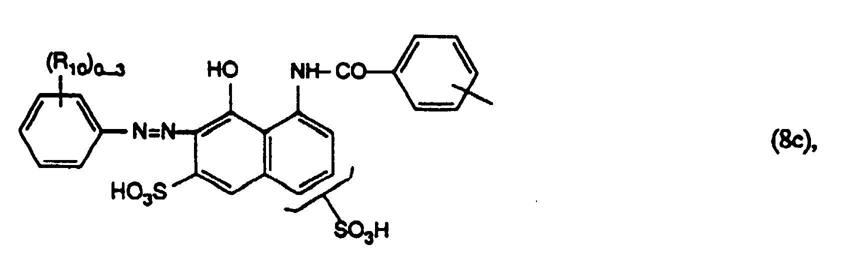 in which R₁₀ is 0 to 3 identical or different substituents from the group C₁-C₄alkyl, C₁-C₄alkoxy, halogen, carboxyl and sulfo, 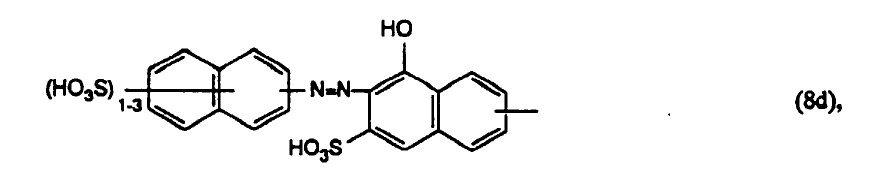 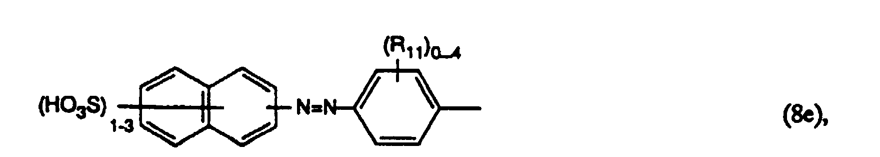 in which R₁₁ is 0 to 4 identical or different substituents from the group halogen, nitro, cyano, trifluoromethyl, sulfamoyl, carbamoyl, C₁-C₄alkyl, C₁-C₄alkoxy, amino, acetylamino, ureido, hydroxyl, carboxyl, sulfomethyl and sulfo, 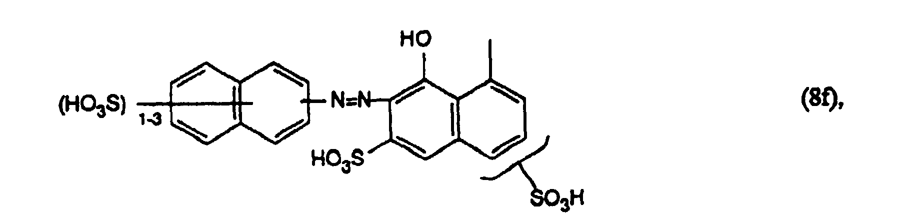 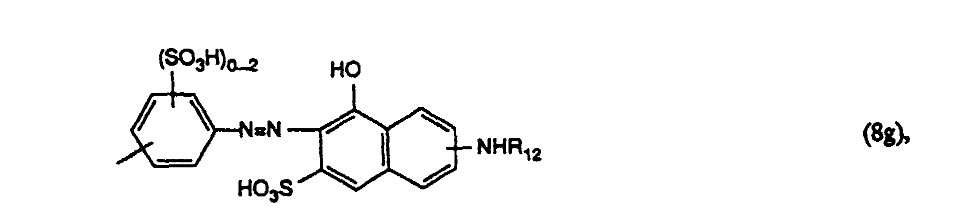 in which R₁₂ is C₁-C₄alkanoyl, benzoyl or a halotriazinyl radical which may be further substituted, 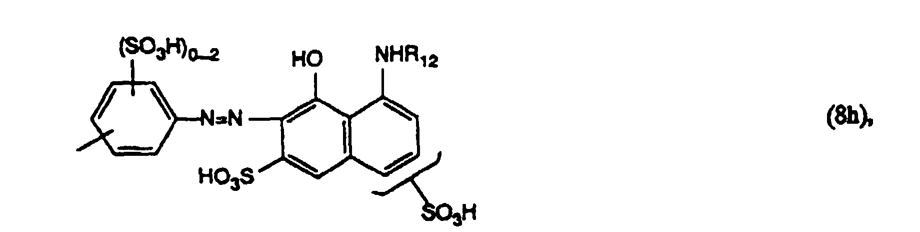 in which R₁₂ is C₁-C₄alkanoyl, benzoyl or a halotriazinyl radical which may be further substituted, 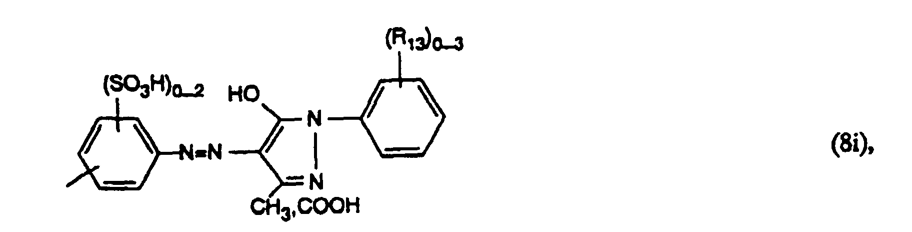 in which R₁₃ is 0 to 3 identical or different substituents from the group C₁-C₄alkyl, C₁-C₄alkoxy, halogen, carboxyl and sulfo, 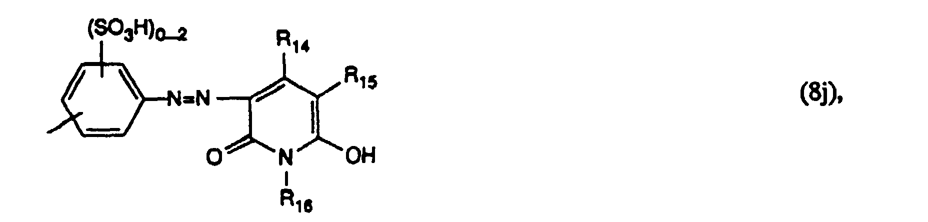 in which R₁₄ and R₁₆ independently of one another are hydrogen, C₁-C₄alkyl or phenyl,
and
R₁₅ is hydrogen, cyano, carbamoyl or sulfomethyl, 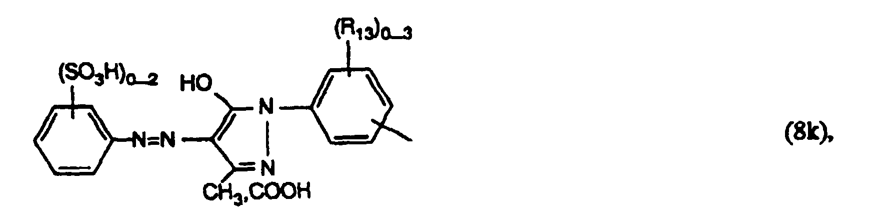 in which R₁₃ is 0 to 3 identical or different substituents from the group C₁-C₄alkyl, C₁-C₄alkoxy, halogen, carboxyl and sulfo, 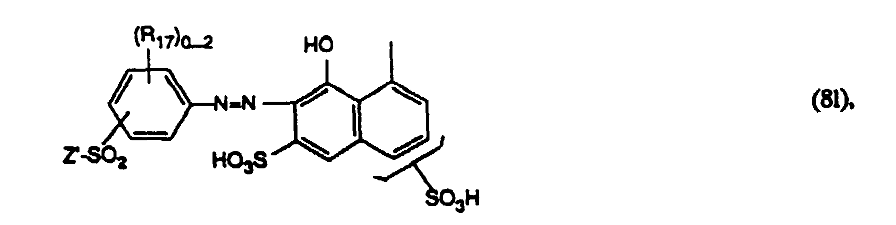 in which R₁₇ is 0 to 2 identical or different substituents from the group C₁-C₄alkyl, C₁-C₄alkoxy, halogen, carboxyl and sulfo; and Z' is β-sulfatoethyl, β-thiosulfatoethyl, β-phosphatoethyl, β-acyloxyethyl, β-haloethyl or vinyl, 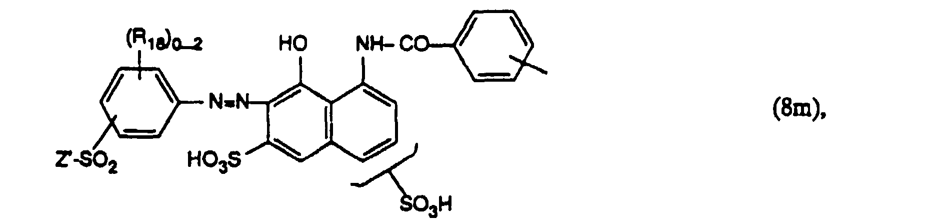 in which R₁₈ is 0 to 2 identical or different substituents from the group C₁-C₄alkyl, C₁-C₄alkoxy, halogen, carboxyl and sulfo; and Z' is β-sulfatoethyl, β-thiosulfatoethyl, β-phosphateothyl, β-acyloxyethyl, β-haloethyl or vinyl, 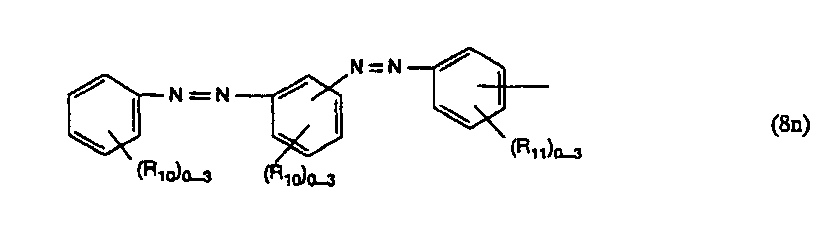 or 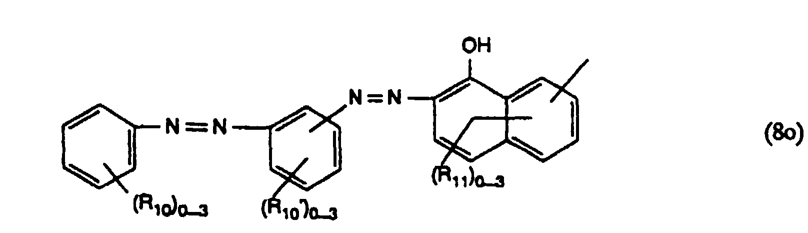 or 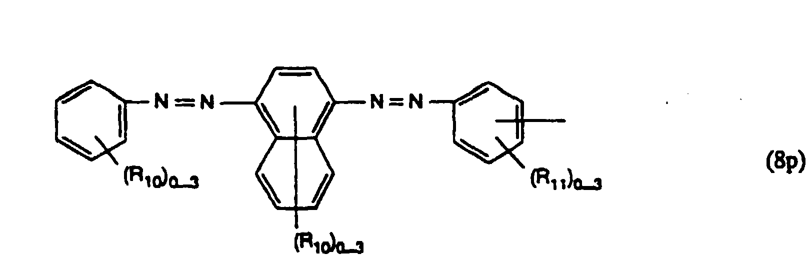 or 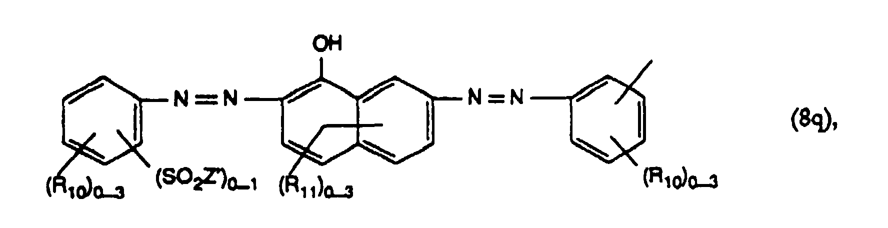 in which R₁₀ is 0 to 3 identical or different substituents from the group C₁-C₄alkyl, C₁-C₄alkoxy, halogen, carboxyl and sulfo,
R₁₀' is as defined for R₁₀ and can additionally be C₁-C₄hydroxyalkoxy or C₁-C₄sulfatoalkoxy,
R₁₁ is 0 to 3 identical or different substituents from the group halogen, nitro, cyano, trifluoromethyl, sulfamoyl, carbamoyl, C₁-C₄alkyl, C₁-C₄alkoxy, amino, acetylamino, ureido, hydroxyl, carboxyl, sulfomethyl and sulfo and Z' is β-sulfatoethyl, β-thiosulfatoethyl, β-phosphatoethyl, β-acyloxyethyl, β-haloethyl or vinyl, 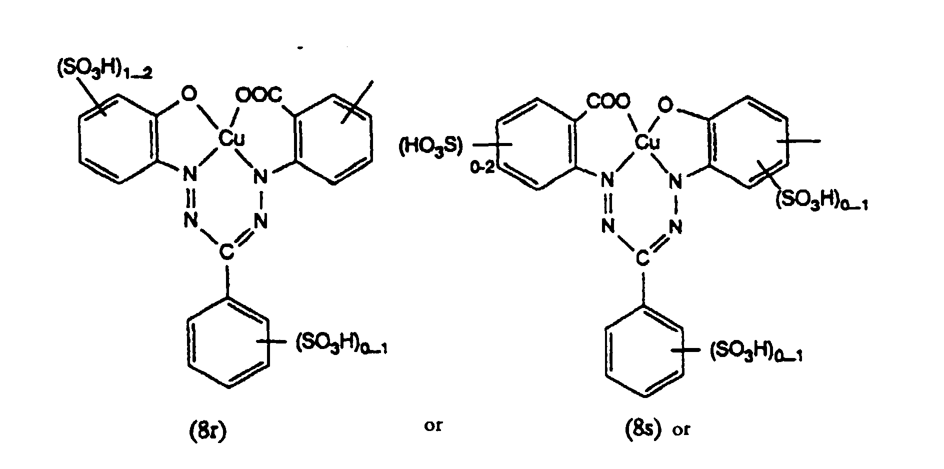 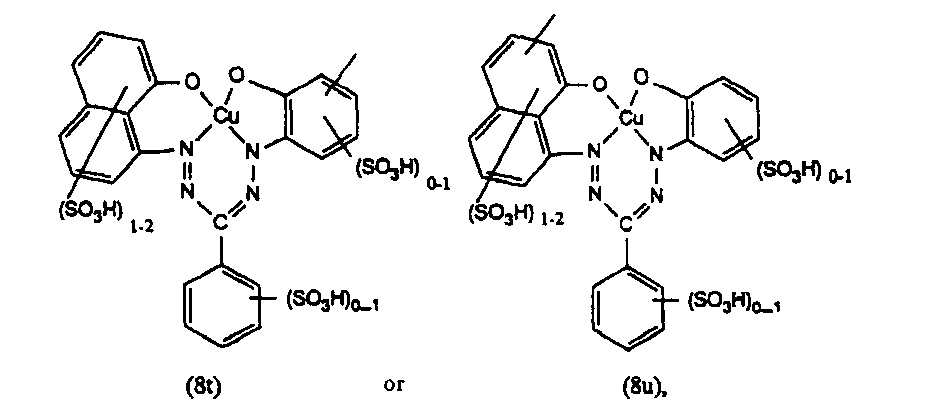 in which the benzene nuclei contain no further substituents or are further substituted by C₁-C₄alkyl, C₁-C₄alkoxy, C₁-C₄alkylsulfonyl, halogen or carboxyl, 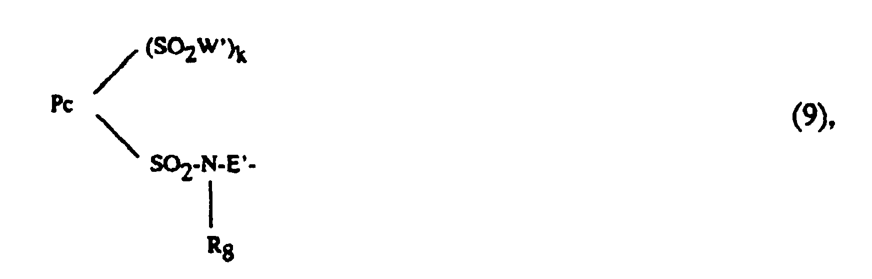 in which Pc is the radical of a metal phthalocyanine, in particular the radical of a copper phthalocyanine or nickel phthalocyanine;
W' is -OH and/or -NR₉R₉';
R₉ and R₉' independently of one another are hydrogen or C₁-C₄alkyl which is unsubstituted or substituted by hydroxyl or sulfo;
R₈ is hydrogen or C₁-C₄alkyl;
E' is a phenylene radical which is unsubstituted or substituted by C₁-C₄alkyl, halogen, carboxyl or sulfo, or is a C₂-C₆alkylene radical; and
k is 1 to 3, 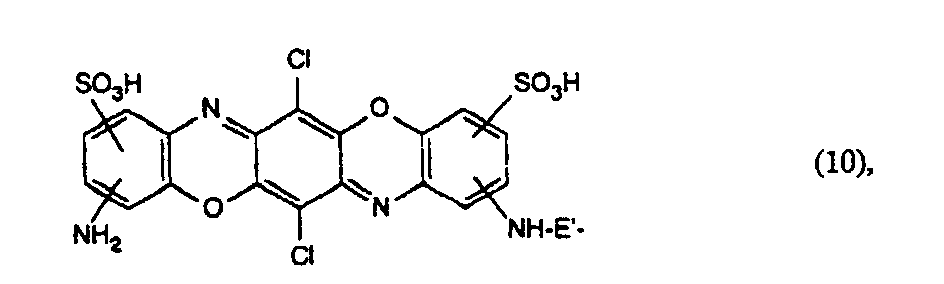 in which E' is a phenylene radical which is unsubstituted or substituted by C₁-C₄alkyl, halogen, carboxyl or sulfo, or is a C₂-C₆alkylene radical, and the outer benzene rings in the formula (10) contain no further substituents or are further substituted by C₁-C₄alkyl, C₁-C₄alkoxy, acetylamino, nitro, halogen, carboxyl, sulfo or -SO₂-Z', in which Z' is β-sulfatoethyl, β-thiosulfatoethyl, β-phosphatoethyl, β-acyloxyethyl, β-haloethyl or vinyl, or 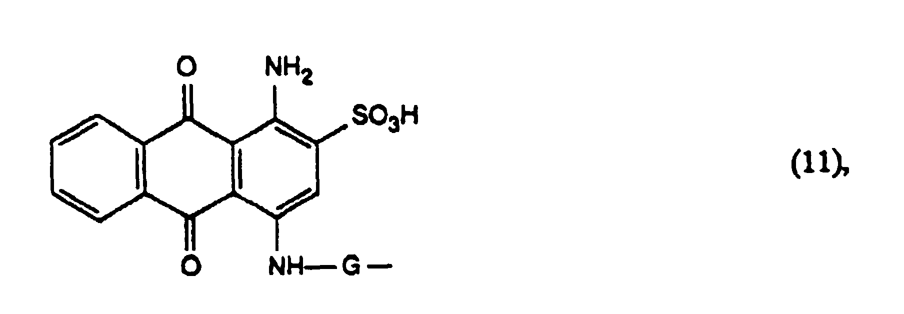 in which G is a phenylene, cyclohexylene, phenylenemethylene or C₂-C₆alkylene radical, and in which the anthraquinone nucleus is substituted by a further sulfo group and a phenyl radical G is unsubstituted or substituted by C₁-C₄alkyl, C₁-C₄alkoxy, halogen, carboxyl or sulfo.

7. A dye mixture according to any one of claims 1 to 6, wherein the radicals A₁ and A₂ in each case contain at least one sulfo group.

8. A dye mixture according to claim 1 which comprises at least two reactive dyes of the formula (1) which differ only in respect of the meaning of the bridge member B.

9. A dye mixture according to any one of claims 1 to 8, which comprises at least two reactive dyes of the formula (1) in which
R₁, R₂, R₃ and R₄ are hydrogen,
B is a C₂-C₁₂alkylene radical which can be interrupted by 1, 2 or 3 radicals -O-, and the reactive dyes of the formula (1) differ only in respect of the meaning of the bridge member B.

10. A process for the preparation of a dye mixture according to claim 1, which comprises reacting radicals of the formulae
A₁-N(R₁)H (12a) and A₂-N(R₄)H (12b)
or corresponding dye precursors, at least one halotriazine compound and at least one diamine of the formula 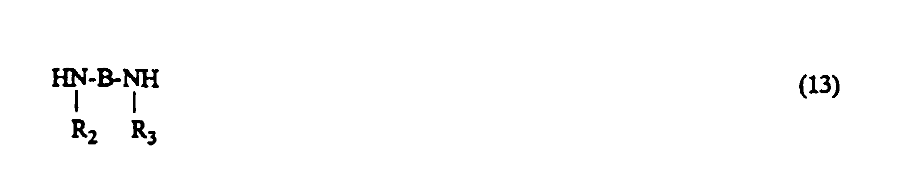 in which A_{1,} A₂, R₁, R₂, R₃, R₄ and B are as defined in claim 1, with one another in any sequence, or, if dye precursors are used, converting the resulting intermediates into the desired dyes, and if appropriate then carrying out a further conversion reaction, where at least two radicals of the formula (13) which differ from one another are used.

11. The use of a dye mixture according to any one of claims 1 to 9 or of a dye mixture obtained according to claim 10 for dyeing or printing fibre materials containing hydroxyl groups or containing nitrogen.

12. The use according to claim 11 for dyeing or printing cellulosic fibre materials or natural or synthetic polyamide fibre materials.

## Revendications

1. Compositions de colorants, qui sont caractérisés en ce qu'elles contiennent au moins deux colorants réactifs de formule 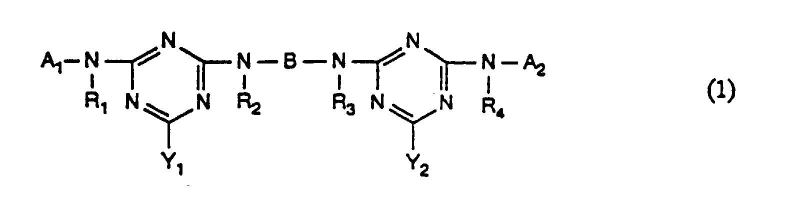 dans laquelle
A₁ et A₂ ont des significations identiques et représentent le résidu d'un colorant monoazoïque, polyazoïque, complexe azoïque d'un métal, anthraquinone, phtalocyanine, formazan, azométhine, dioxazine, phénazine, stilbène, triphénylméthane, xanthène, thioxanthone, nitroaryle, naphtoquinone, pyrènequinone ou pérylènetétracarbimide,
R₁, R₂, R₃ et R₄ représentent indépendamment les uns des autres un atome d'hydrogène ou un groupe alkyle en C₁-C₄ éventuellement substitué,
B un groupe alkylène en C₂-C₁₂, qui peut être interrompu par 1, 2 ou 3 groupes -O-,
Y₁ et Y₂ représentent indépendamment l'un de l'autre un atome d'halogène ou un groupe carboxypyridinium, et les colorants réactifs de formule (1) cités se différencient seulement par les significations des groupes R₂, R₃ et/ou B,
avec la condition que les compositions ne contiennent pas deux ou plusieurs des colorants de formules 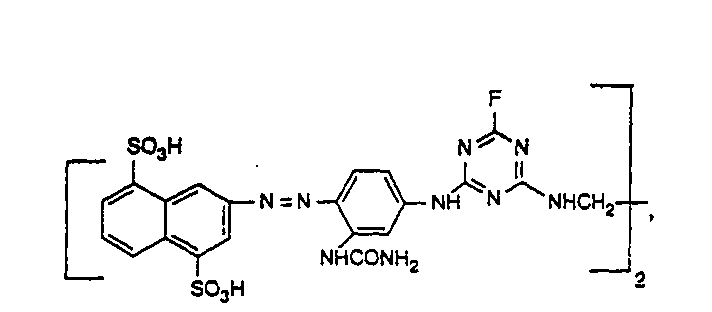 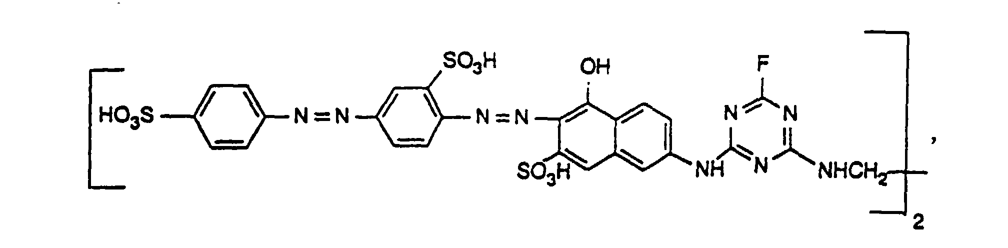 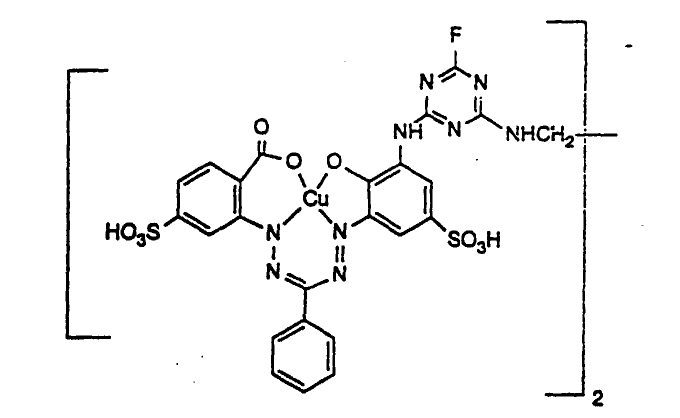 et

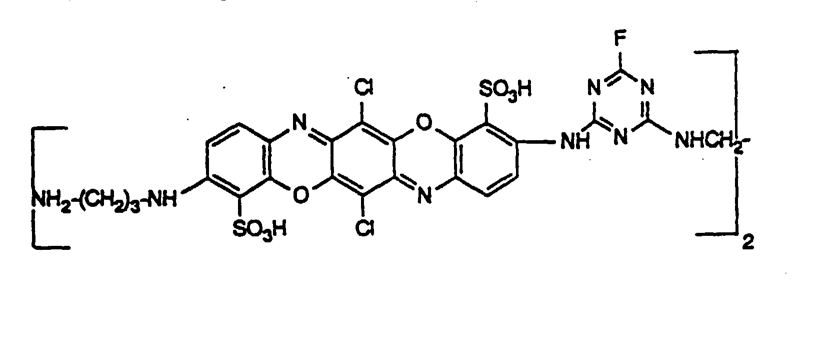

2. Compositions de colorants selon la revendication 1, caractérisées en ce que Y₁ et Y₂ représentent indépendamment l'un de l'autre le fluor ou le chlore.

3. Compositions de colorants selon l'une des revendications 1 et 2, caractérisées en ce que R₁, R₂, R₃ et R₄ représentent indépendamment les uns des autres un atome d'hydrogène, un groupe méthyle ou éthyle, en particulier un atome d'hydrogène.

4. Compositions de colorants selon l'une des revendications 1 à 3, caractérisées en ce que B est un groupe alkylène en C₂-C₆.

5. Compositions de colorants selon l'une des revendications 1 à 4, caractérisées en ce que A₁ et A₂ représentent le résidu d'un colorant monoazoïque, disazoïque, anthraquinone, dioxazine, phtalocyanine ou formazan.

6. Compositions de colorants selon l'une des revendications 1 à 5, caractérisées en ce que A₁ et A₂ sont des résidus de formules 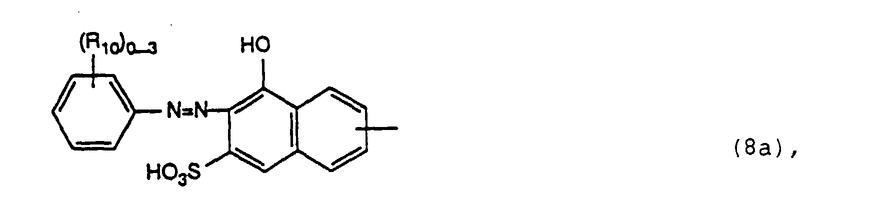 dans laquelle R₁₀ représente 0 à 3 substituants identiques ou différents choisis parmi un groupe alkyle en C₁-C₄, alcoxy en C₁-C₄, un atome d'halogène, un groupe carboxy ou sulfo, 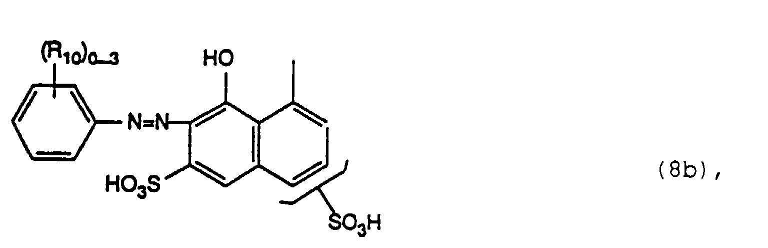 dans laquelle R₁₀ représente 0 à 3 substituants identiques ou différents choisis parmi un groupe alkyle en C₁-C₄, alcoxy en C₁-C₄, un atome d'halogène, un groupe carboxy ou sulfo, 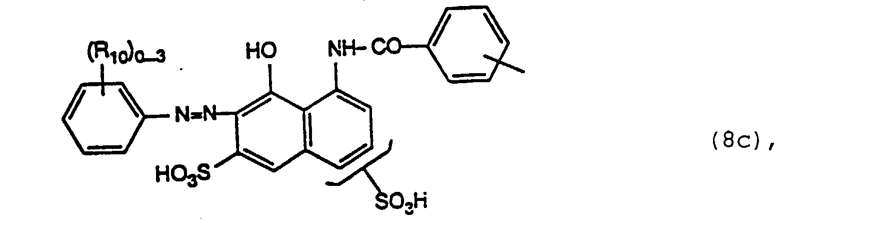 dans laquelle R₁₀ représente 0 à 3 substituants identiques ou différents choisis parmi un groupe alkyle en C₁-C₄, alcoxy en C₁-C₄, un atome d'halogène, un groupe carboxy ou sulfo, 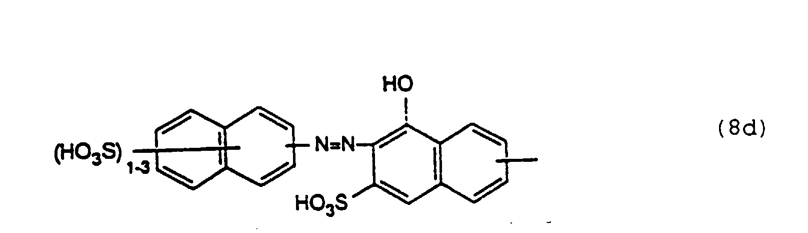 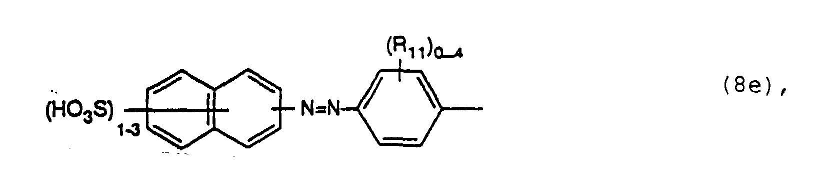 dans lesquelles R₁₁ représente 0 à 4 substituants identiques ou différents choisis parmi un atome d'halogène, un groupe nitro, cyano, trifluorométhyle, sulfamoyle, carbamoyle, alkyle en C₁-C₄, alcoxy en C₁-C₄, amino, acétylamino, uréido, hydroxy, carboxy, sulfométhyle et sulfo, 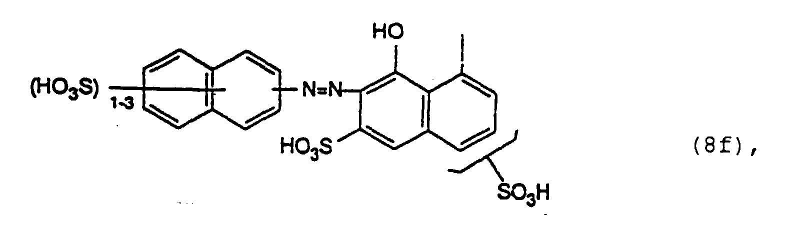 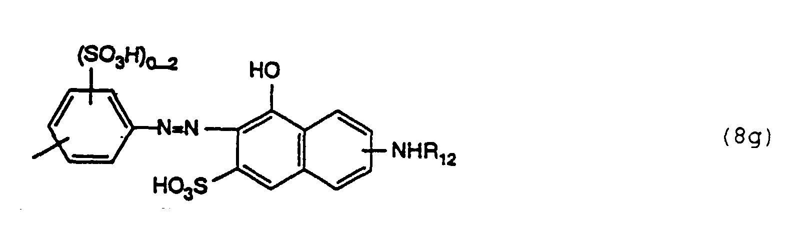 dans lesquelles R₁₂ représente un groupe alcanoyle en C₁-C₄, benzoyle ou un groupe halogénotriazinyle éventuellement encore substitué, 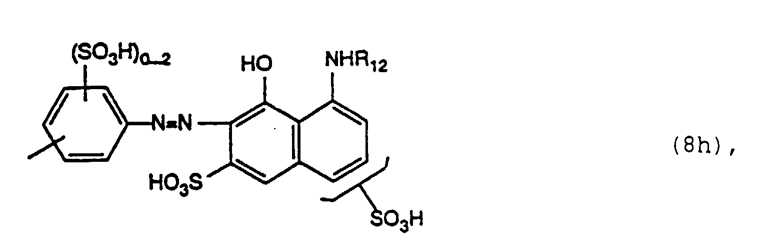 dans laquelle R₁₂ représente un groupe alcanoyle en C₁-C₄, benzoyle ou un groupe halogénotriazinyle éventuellement encore substitué, 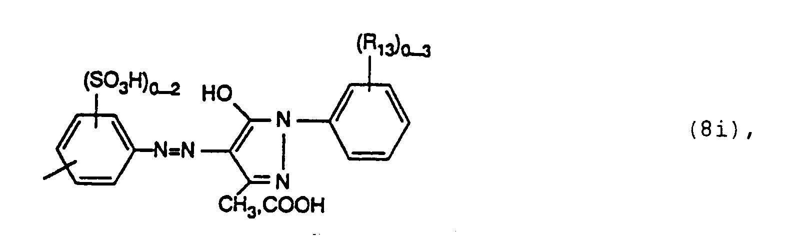 dans laquelle R₁₃ représente 0 à 3 substituants identiques ou différents choisis parmi un groupe alkyle en C₁-C₄, alcoxy en C₁-C₄, un atome d'halogène, un groupe carboxy ou sulfo, 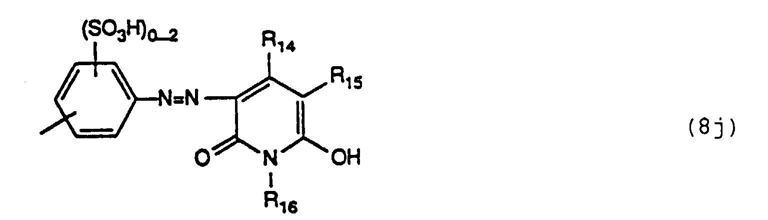 dans laquelle R₁₄ et R₁₆ représentent indépendamment l'un de l'autre un atome d'hydrogène, un groupe alkyle en C₁-C₄ ou phényle, et R₁₅ représente un atome d'hydrogène, un groupe cyano, carbamoyle ou sulfométhyle, 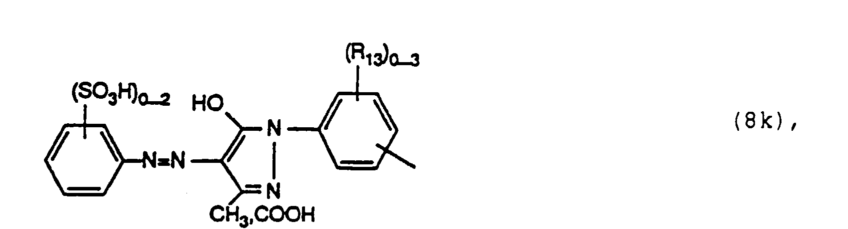 dans laquelle R₁₃ représente 0 à 3 substituants identiques ou différents choisis parmi un groupe alkyle en C₁-C₄, alcoxy en C₁-C₄, un atome d'halogène, un groupe carboxy ou sulfo, 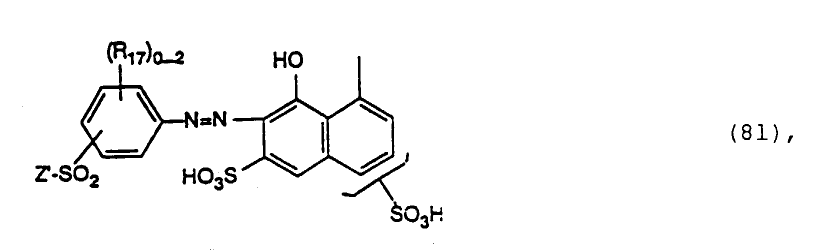 dans laquelle R₁₇ représente 0 à 2 substituants identiques ou différents choisis parmi un groupe alkyle en C₁-C₄, alcoxy en C₁-C₄, un atome d'halogène, un groupe carboxy ou sulfo ; et Z' est un groupe sulfatoéthyle, β-thiosulfatoéthyle, β-phosphatoéthyle, β-acyloxyéthyle, β-halogénoéthyle ou vinyle, 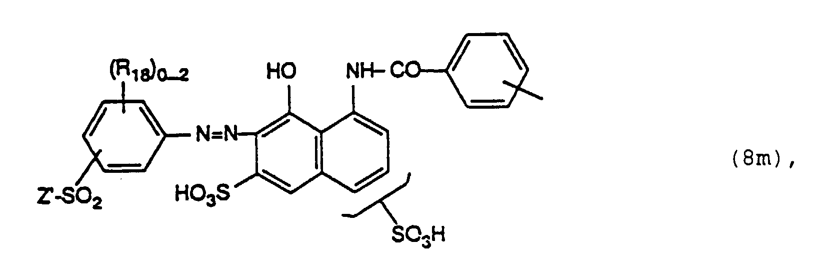 dans laquelle R₁₈ représente 0 à 2 substituants identiques ou différents choisis parmi un groupe alkyle en C₁-C₄, alcoxy en C₁-C₄, un atome d'halogène, un groupe carboxy ou sulfo ; et Z' est un groupe sulfatoéthyle, β-thiosulfatoéthyle, β-phosphatoéthyle, β-acyloxyéthyle, β-halogénoéthyle ou vinyle, 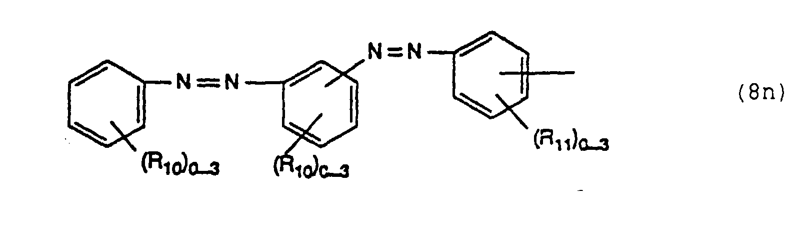 ou 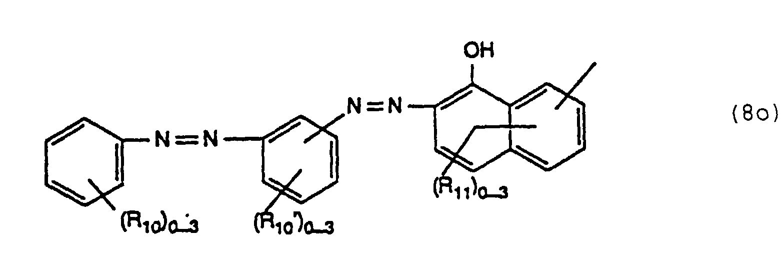 ou 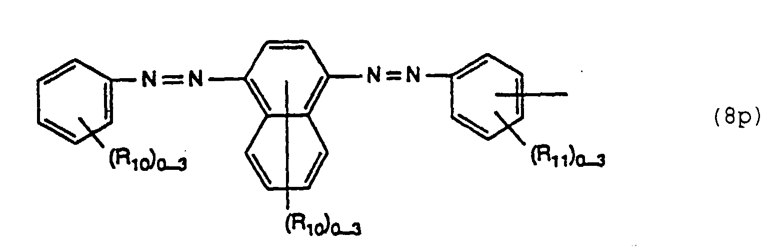 ou 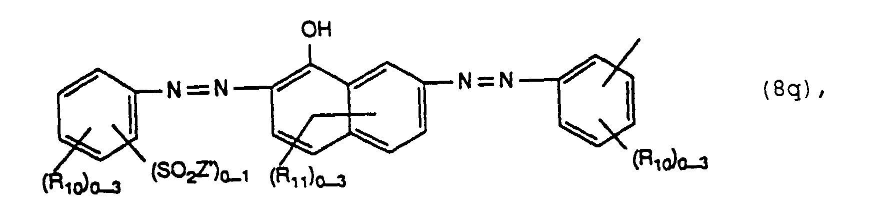 dans lesquelles R₁₀ représente 0 à 3 substituants identiques ou différents choisis parmi un groupe alkyle en C₁-C₄, alcoxy en C₁-C₄, un atome d'halogène, un groupe carboxy ou sulfo, R₁₀' a les significations indiquées pour R₁₀ et peut représenter en plus un groupe hydroxyalcoxy en C₁-C₄ ou sulfatoalcoxy en C₁-C₄, R₁₁ représente 1 à 3 substituants identiques ou différents choisis parmi un atome d'halogène, un groupe nitro, cyano, trifluorométhyle, sulfamoyle, carbamoyle, alkyle en C₁-C₄, alcoxy en C₁-C₄, amino, acétylamino, uréido, hydroxy, carboxy, sulfométhyle et sulfo et Z' est un groupe β-sulfatoéthyle, β-thiosulfatoéthyle, β-phosphatoéthyle, β-acyloxyéthyle, β-halogénoéthyle ou vinyle. 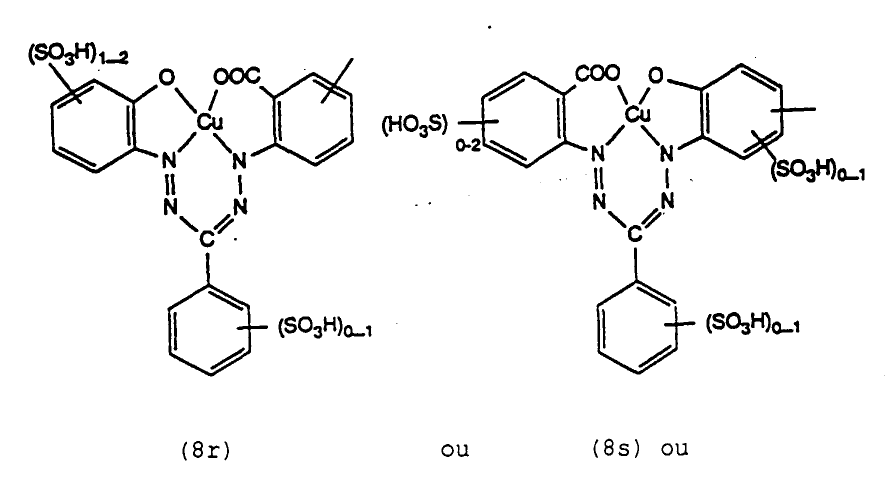 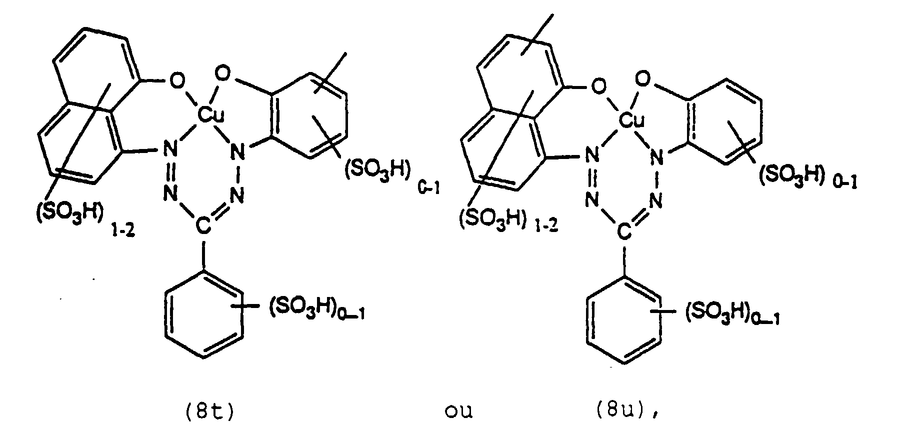 dans lesquelles les noyaux benzéniques ne contiennent pas d'autres substituants ou sont encore substitués par un groupe alkyle en C₁-C₄, alcoxy en C₁-C₄, alkylsulfonyle en C₁-C₄, un atome d'halogène ou un groupe carboxy, 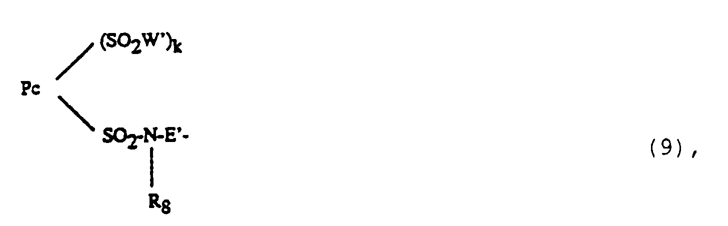 dans laquelle Pc est le résidu d'une phtalocyanine de métal, en particulier le résidu d'une phtalocyanine de cuivre ou de nickel; W' est -OH et/ou -NR₉R₉'; R₉ et R₉' représentent indépendamment l'un de l'autre un atome d'hydrogène ou un groupe alkyle en C₁-C₄ éventuellement substitué par un groupe hydroxy ou sulfo; R₈ est un atome d'hydrogène ou un groupe alkyle en C₁-C₄, E' un groupe phényle éventuellement substitué par un groupe alkyle en C₁-C₄, un atome d'halogène, un groupe carboxy ou sulfo ou représente un groupe alkylène en C₂-C₆ ; et k est 1 à 3, 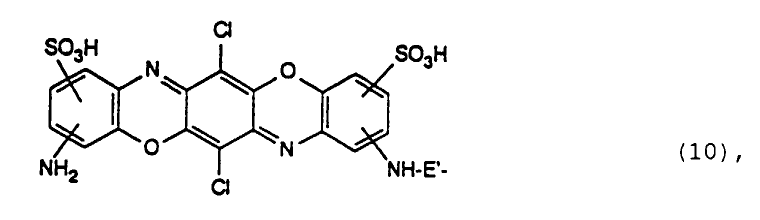 dans laquelle E' est un groupe phénylène éventuellement substitué par un groupe alkyle en C₁-C₄, un atome d'halogène, un groupe carboxy ou sulfo ou un groupe alkylène en C₁-C₄ et les noyaux benzéniques extérieurs dans la formule (10) ne contiennent pas d'autres substituants ou sont encore substitués par un groupe alkyle en C₁-C₄, alcoxy en C₁-C₄, acétylamino, nitro, un atome halogène, un groupe carboxy, sulfo ou -SO₂-Z', dans lequel Z' est un groupe β-sulfatoéthyle, β-thiosulfatoéthyle, β-phosphatoéthyle, β-acyloxyéthyle, β-halogénoéthyle ou vinyle, ou 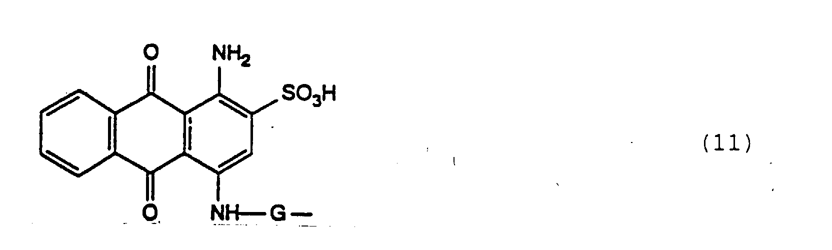 dans laquelle G est un groupe phénylène, cyclohexylène, phénylèneméthylène ou alkylène en C₂-C₆, dans laquelle le noyau anthraquinone peut être substitué par un autre groupe sulfo, et G en tant que résidu de phényle peut être non substitué ou substitué par un groupe alkyle en C₁-C₄, alcoxy en C₁-C₄, un atome d'halogène, un groupe carboxy ou sulfo.

7. Compositions de colorants selon l'une des revendications 1 à 6, caractérisées en ce que les groupes A₁ et A₂ contiennent respectivement au moins un groupe sulfo.

8. Compositions de colorants selon la revendication 1, caractérisées en ce qu'elles contiennent au moins deux colorants réactifs de formule (1), qui se distinguent seulement par la signification du chaînon pontant B.

9. Compositions de colorants selon l'une des revendications 1 à 8, caractérisées en ce qu'elles contiennent au moins deux colorants réactifs de formule (1), dans laquelle R₁, R₂, R₃ et R₄ représentent un atome d'hydrogène, B est un groupe alkylène en C₂-C₁₂ qui peut être interrompu par 1, 2 ou 3 groupes -O-, et en ce que les colorants réactifs de formule (1) se distinguent seulement par la signification du chaînon pontant B.

10. Procédé de préparation de compositions de colorants selon la revendication 1, caractérisé en ce qu'on met à réagir ensemble des groupes de formules
A₁-N(R₁)H (12a) et A₂-N(R₄)H (12b)
ou des précurseurs de colorants correspondants, au moins un composé halogénotriazine et au moins une diamine de formule 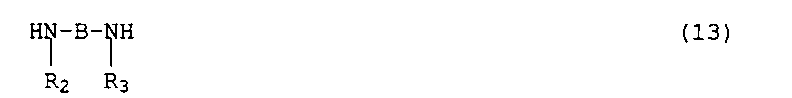 dans l'ordre préféré, formules dans lesquelles A₁, A₂, R₁, R₂, R₃, R₄ et B ont les significations indiquées à la revendication 1, ou, dans le cas de l'utilisation de précurseurs de colorants, on transforme les produits intermédiaires obtenus en colorants souhaités et on termine éventuellement par une autre réaction de transformation, dans laquelle on utilise au moins deux groupes de formule (13) différents entre eux.

11. Utilisation des compositions de colorants selon l'une des revendications 1 à 9 ou des compositions de colorants obtenues selon le revendication 10 pour la teinture ou l'impression de matériaux fibreux contenant des groupes hydroxyle ou contenant de l'azote.

12. Utilisation selon la revendication 11 pour la teinture ou l'impression de matériaux fibreux contenant de la cellulose ou de matériaux de fibres de polyamide naturels ou synthétiques.
